(19) Europäisches Patentamt
European Patent Office
Office européen des brevets

(11) **EP 2 676 128 B1**

(12) **EUROPEAN PATENT SPECIFICATION**

(45) Date of publication and mention
of the grant of the patent:
**21.08.2019 Bulletin 2019/34**

(51) Int Cl.:
**G01V 5/00** *(2006.01)*     **G01N 23/046** *(2018.01)*
**G06T 7/00** *(2017.01)*     **G06T 3/00** *(2006.01)*

(21) Application number: **12722827.8**

(22) Date of filing: **16.02.2012**

(86) International application number:
**PCT/IB2012/000570**

(87) International publication number:
**WO 2012/110898 (23.08.2012 Gazette 2012/34)**

(54) **SYSTEM AND METHOD FOR MULTI-SCANNER X-RAY INSPECTION**

SYSTEM UND VERFAHREN FÜR RÖNTGENUNTERSUCHUNGEN MIT MEHREREN SCANNERN

SYSTÈME ET PROCÉDÉ D'INSPECTION AUX RAYONS X À SCANNERS MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.02.2011   US 201161444541 P**

(43) Date of publication of application:
**25.12.2013   Bulletin 2013/52**

(73) Proprietor: **Smiths Heimann GmbH
65205 Wiesbaden (DE)**

(72) Inventors:
• **DREISEITEL, Pia**
  **65760 Eschborn (DE)**
• **MUENSTER, Matthias**
  **65189 Wiesbaden (DE)**
• **KOENIG, Sebastian**
  **65183 Wiesbaden (DE)**

(74) Representative: **Finnegan Europe LLP
1 London Bridge
London SE1 9BG (GB)**

(56) References cited:
**US-A1- 2003 147 489     US-A1- 2006 104 414**

## Description

Technical Field

Systems and methods consistent with the present invention are directed generally to systems and methods for x-ray inspection, and more particularly to systems and methods for multi-scanner x-ray inspection.

Background

Various x-ray scanning systems can be used for baggage inspection, for example, at an airport or a train station, to detect the presence of explosives and other prohibited items in baggage or luggage. X-ray scanning systems are capable of measuring one or more parameters that can be used to characterize a scanned material, such as an absorption coefficient or an effective atomic number. For example, and without limitation, explosive materials can be detected based on the fact that their detected absorption coefficient and/or effective atomic number are differentiable from those of other items typically found in baggage.

A common step towards detecting explosive materials in an item is to expose the item to x-rays and to measure the amount of radiation absorbed by the item. An x-ray scanning system can contain a radiation source that is configured to emit x-ray radiation towards the item under inspection, and a detector on the opposite side of the item to detect the x-ray radiation that is not completely absorbed by the item. Based on different acquisition schemes, various sets of projection data can be acquired, from which one can derive one or more material-specific parameters.

For example, in a computed tomography (CT) system, the source and detector are conventionally arranged in a rotating manner and multiple sets of projection data can be collected at various projection angles. An absorption coefficient map of the item can be reconstructed based on the sets of projection data. Explosive materials can then be detected by comparing the absorption coefficients in the set of acquired data with known absorption coefficients of explosive materials.

As another example, in a multi-energy x-ray system, the source can emit x-ray radiation over a continuous spectrum of energies, and the detector can measure multiple sets of projection data at multiple energy ranges within that continuous spectrum, such as a first set of projection data at a first energy range within that continuous spectrum, a second set of projection data at a second energy range within that continuous spectrum, etc. Based on the collected projection data, an effective atomic number map (also known as a "Z image") of the materials can be calculated. Explosives can be detected by determining if any region in the Z image has effective atomic numbers falling into one or more ranges associated with explosives. However, relying on a CT scanner or a multi-energy x-ray scanner alone, false alarms can occur at a high rate, especially when the scans are taken at a fast speed and/or the explosive material is under or inside some other materials.

The quality of conventional scanning systems, including multi-scanner systems, can be limited by the amount of unknown information about the item being scanned. A common unknown variable simply relates to the random nature by which material can be placed together in an item being scanned, especially when multiple objects overlap with each other along the travel path of the x-ray. By way of example only, an explosive material may exhibit a significantly lower effective atomic number than metals. If such an explosive object is behind a metal object along the projection path of a multi-energy single view scanner, the calculated effective atomic number of these two objects combined can mimic the effective atomic number of a non-explosive, or non-prohibited, item. As a result, the explosive can be missed by conventional inspection system.

U.S. Patent Application Publication No. 2003147489 is directed towards a method and apparatus for transmitting information about a target object between a pre-scanner and a CT scanner. U.S. Patent Application Publication No. 2006104414 is directed towards combinatorial contraband detection using energy dispersive x-ray diffraction.

Summary

In accordance with aspects of the invention there is provided a method of analyzing a target item utilizing multiple scanners, as set out by claims 1- 22, a system configured to analyze a target item utilizing multiple scanners, as set out by claims claim 23-24, and a computer-readable medium comprising instructions to cause a computer to perform a method of analyzing a target item, as set out in claim 25.

In one aspect, the present disclosure is directed to a method of analyzing a target item utilizing multiple scanners. The method includes providing an item comprising a material. The method further includes acquiring a first set of scan data associated with the item using a first scanner, and acquiring a second set of scan data associated with the item using a second scanner. The method further includes generating a first set of transform data from the first set of scan data, analyzing the first set of transform data to identify a subset of the first set of transform data associated with a first region, and analyzing the second set of scan data to identify a subset of the second set of scan data associated with a second region. The method also includes generating a measure that at least a portion of scan data is consistent with a presence of a candidate material in the item, where the portion of scan data is selected from at least one of the set consisting of: the subset of the first set of transform data and the subset of the second set of scan data.

In another aspect, the present disclosure is directed to a system configured to analyze a target item utilizing multiple scanners. The system includes a conveyor configured to provide an item to a first scanner and a second scanner. The item comprises a material. The first scanner is configured to acquire a first set of scan data associated with the item, and the second scanner is configured to acquire a second set of scan data associated with the item. The system further includes a transform calculator configured to generate a first set of transform data from the first set of scan data. The system further includes a region data classifier configured to identify a subset of the first set of transform data associated with a first region and to identify a subset of the second set of scan data associated with a second region. The system also includes a candidate material calculator configured to generate a measure that at least a portion of scan data is consistent with a presence of a candidate material in the item, where the portion of scan data is selected from at least one of the set consisting of: the subset of the first set of transform data and the subset of the second set of scan data.

In yet another aspect, the present disclosure is directed to a computer-readable medium comprising instructions stored thereon. The instructions causes a computer to perform a method of analyzing a target item utilizing multiple scanners. The method includes receiving a first set of scan data associated with an item and receiving a second set of scan data associated with the item. The item comprises a material. The first set of scan data is acquired by a first scanner, and the second set of scan data is acquired by a second scanner. The method further includes generating a first set of transform data from the first set of scan data, analyzing the first set of transform data to identify a subset of the first set of transform data associated with a first region, and analyzing the second set of scan data to identify a subset of the second set of scan data associated with a second region. The method also includes generating a measure that at least a portion of scan data is consistent with a presence of a candidate material in the item, where the portion of scan data is selected from at least one of the set consisting of: the subset of the first set of transform data and the subset of the second set of scan data.

Brief Description of the Drawings

FIG. 1 is a schematic diagram of an inspection system consistent with an exemplary embodiment of the present invention;

FIG. 2 is a schematic diagram of a data processing system, consistent with the exemplary disclosed embodiment shown in FIG. 1;

FIG. 3 is a schematic diagram of an exemplary item under inspection;

FIG. 4 is a schematic diagram of a three-dimensional CT image of a portion of the exemplary item shown in FIG. 3;

FIG. 5 is a schematic diagram of a two-dimensional projection image of a portion of the exemplary item shown in FIG. 3;

FIG. 6 is a flow chart of a first exemplary process of analyzing a target item utilizing multiple scanners;

FIG. 7 is a flow chart of a second exemplary process of analyzing a target item utilizing multiple scanners, consistent with the present invention;

FIG. 8 is a flow chart of a first exemplary process of identifying probable material in a second region of the item, consistent with Step 608 shown in FIG. 6 and Step 712 shown in FIG. 7;

FIG. 9 is a schematic diagram illustrating the first exemplary process of identifying probable material, consistent with FIG. 8;

FIG. 10 is a flow chart of a secondary exemplary process of identifying probable material in a second region of the item, consistent with Step 608 shown in FIG. 6 and Step 712 shown in FIG. 7;

FIG. 11 is a schematic diagram illustrating the second exemplary process of identifying probable material, consistent with FIGS. 10 and 12; and

FIG. 12 is a flow chart of a further secondary exemplary process of identifying probable material in a second region of the item, consistent with Step 608 shown in FIG. 6 and Step 712 shown in FIG. 7.

Detailed Description

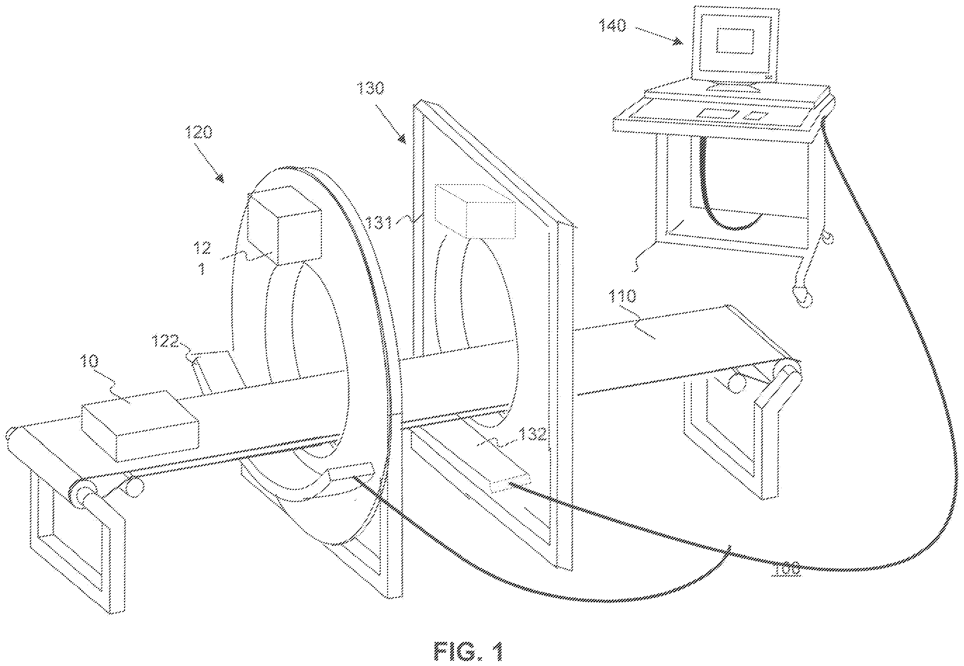

FIG. 1 is a schematic diagram of an inspection system 100 according to an exemplary embodiment of the present disclosure. Inspection system 100 can be configured to inspect an item 10 and detect any material or object of interest contained in item 10. For example, item 10 can be a container, crate, bag, box, or item of luggage. Item 10 can be any item that is to be transported by an airplane, sea vessel, train, or other mode of conveyance or into or within infrastructure, which can contain a plurality of objects such as clothes, shoes, electronic devices, books, etc. An item 10 also can contain an object of interest, such as a weapon, e.g. a gun or knife, incendiaries, narcotics, or explosives, such as, but not limited to a bomb, improvised explosive device, liquid explosive material, plastic explosives, and the like. In one embodiment, inspection system 100 can be employed at a security check point for checked baggage or carry-on baggage at an airport to detect these prohibited objects of interest or materials in item 10. However, it is contemplated that inspection system 100 can be employed to detect any object of interest or material in any item capable of being scanned.

Inspection system 100 can include a conveyor 110, a CT scanner 120, a scanner 130, and a data processing system 140 coupled to scanners 120 and 130. Conveyor 110 can include belts for supporting item 10 and one or more motors that drive the belts. The belts can rotate intermittently or continuously to convey or provide item 10 from a loading area through a central aperture of CT scanner 120 and scanner 130. Conveyor 110 is illustrated as including a plurality of individual conveyor sections in FIG. 1; however, it is contemplated that other forms of conveyors can be used.

Any suitable CT scanner can be used. For example, the CT scanner 120 can include a cone beam, such as a three-dimensional cone beam. CT scanner 120 can include, among other things, an x-ray source 121 and an x-ray detector 122 secured to diametrically opposite sides of an annular-shaped platform or disk. The disk can be rotatably mounted within a gantry support so that in operation the disk continuously rotates about a rotation axis while x-rays pass from the source through item 10 positioned within the aperture of CT scanner 120. X-ray source 121 can generate a cone shaped beam (known as a "cone beam") of x-rays that emanates from the focal spot, and passes through a volumetric imaging field, x-ray detector 122 can include a two-dimensional array of detectors disposed on a circular arc having a center of curvature at the focal spot of x-ray source 121. As conveyor 110 continuously transports item 10 through the aperture of CT scanner 120, the disk rotates about its rotation axis, thereby moving x-ray source 121 and x-ray detector 122 in circular trajectories about item 10. Accordingly, a plurality of projection views of item 10 at different projection angles can be generated and a corresponding plurality of sets of two-dimensional projection data can be acquired by x-ray detector 122. Since the x-rays are partially attenuated by all the mass in their path, the projection data acquired by x-ray detector 122 are representative of the absorption coefficients of all the objects disposed in the volumetric imaging field between x-ray source 121 and x-ray detector 122.

Consistent with other embodiments, the CT scanner 120 also can employ a stationary gantry, whose position remains fixed during data collection. The stationary gantry can have a plurality of x-ray sources and detectors mounted at various positions along the arc of the gantry. These x-ray sources can be electronically steered to generate substantially circular x-ray beams comparable to those generated by a rotating x-ray source. In some embodiments, each x-ray source on the stationary gantry can be activated in a sequential manner, so that one projection view of item 10 is generated each time. In some other embodiments, multiple x-ray sources can be active at the same time, generating multiple projection views of item 10.

Consistent with one embodiment, scanner 130 can be a multi-energy line scanner. Measuring x-ray absorptions at more than one energy value can provide additional information about a material's characteristics, beyond the absorption coefficient of the material. For example, when scanner 130 is a dual energy scanner, two sets of projection data can be collected, which can be used to determine an effective atomic number and/or an electron density of the material.

Scanner 130 can include, among other things, a point x-ray source 131 and a linear x-ray detector 132. Point x-ray source 131 and linear x-ray detector 132 can be mounted, stationary, on opposite sides of the aperture through which item 10 is conveyed. Although Fig. 1 shows the aperture in a circular shape, it is contemplated that the aperture can be of any other suitable shape, such as, for example, a square shape or an oval shape. Point x-ray source 131 can generate a fan beam x-ray radiation over a fan shaped two-dimensional cross-section through which item 10 passes. The energy associated with the x-ray beam can travel along a direction perpendicular to the cross-sectional curved surface determined by point x-ray source 131 to the plane defined by linear x-ray detector 132. As used herein, the radiation data acquired by linear x-ray detector 132 is referred to as "projection data," and the perspective defined by the uniform cross-section intersecting with the scanned item is referred to as a "projection perspective." X-ray beams are generated over a continuous range of energies, and can be generated by multiple x-ray sources or by a single source that operates in a switched manner. The x-ray beams can pass through and be partially attenuated by item 10 and by the objects of interest and then received by the linear x-ray detector 132. During each scan, linear x-ray detector 132 collects multiple sets of projection data representative of the integral of absorption coefficients of the volumetric segment of item 10 through which the x-ray beams pass. Each measurement of projection data forms a raster line of a two-dimensional projection image. As item 10 passes through scanner 130, a two-dimensional projection image can be formed for each energy level from the two-dimensional projection data acquired at that energy value.

Although FIG. 1 shows that CT scanner 120 is positioned in front of scanner 130, the order of the two scanners can be reversed. Although FIG. 1 shows that point x-ray source 131 is mounted on the upper side and linear x-ray detector 132 is mounted on the bottom side, the positions of the sources and corresponding detectors can be switched. Furthermore, although FIG. 1 shows CT scanner 120 and scanner 130 as two separate scanning subsystems mounted on two separate platforms, the two scanners can be integrated as one scanner, i.e., a multi-energy CT scanner. Further still, although FIG. 1 depicts a one-to-one relationship between x-ray detectors and sources (i.e., two sources and two detectors), systems can be implemented with any number of movable or rotatable sources and/or detectors in a one-to-many or many-to-one relationship to illuminate item 10, as, for example, contemplated in U.S. Patent No. 6,453,003.

In one embodiment, both x-ray detector 122 and linear x-ray detector 132 can be coupled with data processing system 140 via, for example, one or more data transmission lines. The multi-angle projection data acquired by CT scanner 120 and the multi-energy projection data acquired by scanner 130 can be transferred to data processing system 140 via the data transmission lines. In another embodiment, the projection data also can be transferred wirelessly to data processing system 140.

Data processing system 140 can include one or more computer assemblies configured to detect an object of interest or a material, such as an explosive material, in item 10, based on scan data received from CT scanner 120 and scanner 130. Data processing system 140 can be associated with one or more software applications, including, for example, an image analysis and/or reconstruction tool and a material classification tool. These software applications can be stored on data processing system 140, and can be accessed by an authorized user, such as an operator at a customs, ports and borders control, or airport. The software applications also can be stored on a computer readable medium, such as a hard drive, computer disk, CD- ROM, or any other suitable medium.

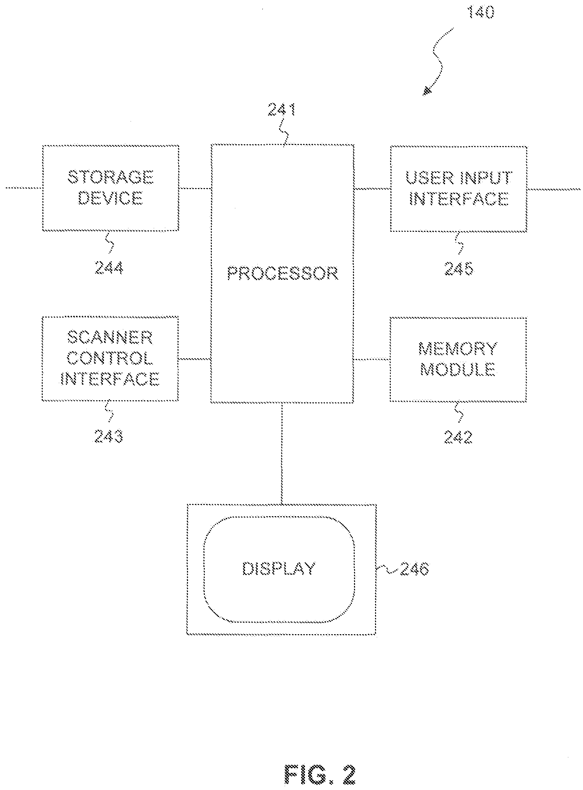

FIG. 2 is a schematic diagram of data processing system 140. Data processing system 140 can include a processor 241, a memory module 242, a scanner control interface 243, a storage device 244, an input/output interface 245, and a display device 246. A data processing system can include additional, fewer, and/or different components than those listed above. The type and number of listed devices are exemplary only and not intended to be limiting.

Processor 241 can be a central processing unit ("CPU") or a graphic processing unit ("GPU"). Processor 241 can execute sequences of computer program instructions to perform various processes that will be explained in greater detail below. Memory module 242 can include, among other things, a random access memory ("RAM") and a read-only memory ("ROM"). The computer program instructions can be accessed and read from the ROM, or any other suitable memory location, and loaded into the RAM for execution by processor 241. Depending on the type of data processing system 140 being used, processor 241 can include one or more printed circuit boards, and/or a microprocessor chip.

Scanner control interface 243 can be configured for two way communication between scanners 120 and 130, and data processing system 140. Consistent with one embodiment, scanner control interface 243 can be configured to receive scan data from CT scanner 120 and scanner 130 and store the data into storage device 244. Consistent with another embodiment, scanner control interface 243 can be further configured to send scan control instructions to CT scanner 120 and scanner 130 to initiate and stop scan operations, or to configure the scanners. For example, the scan control instructions can include configuration parameters, such as, the rotation speed of the gantry of CT scanner 120 and the energy levels of scanner 130.

Storage device 244 can include any type of mass storage suitable for storing information. For example, storage device 244 can include one or more hard disk devices, optical disk devices, or any other storage devices that provide data storage space. In one embodiment of the present disclosure, storage device can store data related to the data processing process, such as the scan data received from CT scanner 120 and scanner 130, and any intermediate data created during the data processing process. Storage device 244 can also include analysis and organization tools for analyzing and organizing the information contained therein.

Data processing system 140 can be accessed and controlled by a user, such as a security officer, using input interface 245. User input interface 245 can be provided for the user to input information into data processing system 140, and can include, for example, a keyboard, a mouse, a touch screen, and/or optical or wireless computer input devices (not shown). The user can input control instructions via user input interface 245 to control the operation of conveyor 110, CT scanner 120 and/or scanner 130. For example, the user can push certain buttons on a keyboard to stop conveyor 110, let it go backward or resume going forward. The user can also input parameters to adjust the operation of data processing system 140.

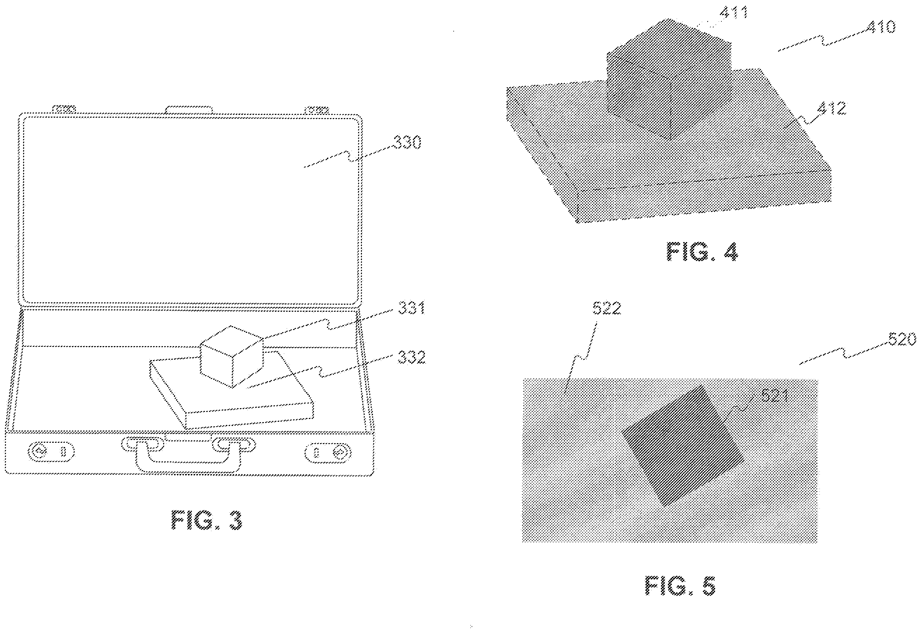

One or more modules of data processing system 140 disclosed consistent with FIG. 2 can be used to implement, for example, a transform calculator, a region data classifier, and a candidate material calculator. These modules will be discussed below associated with exemplary algorithms executed by them, and consistent with an exemplary item 330 under inspection as shown in FIG. 3. As shown in FIG. 3, exemplary item 330 can be any container, such as, for example, a suitcase containing, among other things, an object 331 containing a prohibited object of interest or material and an object 332 containing another material placed underneath object 331.

A transform calculator can be configured to execute an image reconstruction algorithm. For example, the transform calculator can be configured to generate a three-dimensional CT image 410 of exemplary item 330 from the sets of projection data received from CT scanner 120, as shown in FIG. 4. Three-dimensional CT image 410 represents an absorption coefficient map of exemplary item 330. Any suitable three-dimensional CT reconstruction algorithm, including, but not limited to, filtered back projection, Fourier reconstruction, and iterative reconstruction, can be used to transform the projection data into three-dimensional CT image 410.

The region data classifier, either alone or in cooperation with the candidate material calculator, can be configured to execute an image classification algorithm. For example, region data classifier can be configured to identify one or more volumetric regions, such as region 411 and region 412, in three-dimensional CT image 410 that correspond to the objects contained in exemplary item 330. For example, region 411 can correspond to object 331 and region 412 can correspond to object 332. In one embodiment, only those regions containing voxel values that are consistent with an absorption coefficient or a range of absorption coefficients associated with the presence of candidate materials in the item are identified. (As used herein, "candidate materials" refers to materials that are of interest and/or that are prohibited.) For example, voxel values of region 411, indicative of absorption coefficient of object 331, can be within the range of absorption coefficients associated with prohibited materials. However, voxel values of region 412, indicative of absorption coefficient of object 332, can be different from the absorption coefficients associated with that of prohibited materials. Accordingly, the region data classifier, either alone or in conjunction with the candidate material calculator, can identify region 411 for further analysis. Moreover, in one embodiment, the transform calculator can compare the mass and/or volume of an identified region with a candidate region threshold. For example, if the volume of an identified region is smaller than a volume threshold, the identified region can be disregarded as it is too small to be a candidate region, or it may not correspond to a real object of interest, but rather can correspond to merely a reconstruction artifact. Accordingly, identified regions smaller than a volume threshold can be discarded. As a result, this additional thresholding process can mitigate reconstruction errors and artifacts caused during reconstruction of three-dimensional CT image 410.

A candidate material calculator can be configured to execute a material identification algorithm. For example, the candidate material calculator can be configured to analyze all or a portion of the multi-energy projection data acquired by scanner 130. In one embodiment the entire image is analyzed and can be coextensive with a candidate region. In other embodiments, only a smaller, identified, portion of an image can be analyzed. Consistent with one embodiment, a portion of data to be analyzed is determined by mapping regions 411 and 412 to two-dimensional projection images consistent with the projection images of region 520 received from scanner 130, as shown in FIG. 5. Each two-dimensional projection image of region 520 can be formed by the set of projection data acquired at the various energy levels, such as at two energy levels. Preferably, the type of projection used for mapping regions 411 and 412 can be consistent with that used at scanner 130 for obtaining two-dimensional projection images of region 520.

Although FIG. 5 shows parallel projection for illustration purpose, it is contemplated that other type of projection, such as fan beam projection, can be used. Preferably, the mapping of regions 411 and 412 can be carried out using the same projection perspective of scanner 130 as the one that is used to obtain two-dimensional projection images of region 520, so that the mapped image can be registered with two-dimensional projection images of region 520. For example, the portion of multi-energy projection data within region 521 can correspond to a perspective of region 411, and the portion of projection data within region 522 can correspond to a perspective of region 412. When fan beam projection is used, the two-dimensional projection images can be formed by fan-beam data. For the purpose of image registration, the fan-beam projections images can be registered with the fan-beam raw data off scanner 130. Based on these portions of multi-level projection data, candidate material calculator can determine if scan data associated with regions 411 and 412 is consistent with the presence of a candidate material in item 330.

Going back to FIG. 2, data processing system 140 can also provide visualized information to the user via display device 246. For example, display device 246 can include a computer screen (not shown) and provide a graphical user interface ("GUI") to the user. Consistent with one embodiment, display device 246 can display an image of item 10, such as three-dimensional CT image 410 and two-dimensional projection image of region 520. Consistent with another embodiment, display device 246 can also display an inspection report to the user indicating whether scan data is consistent with the presence of a candidate material in item 10.

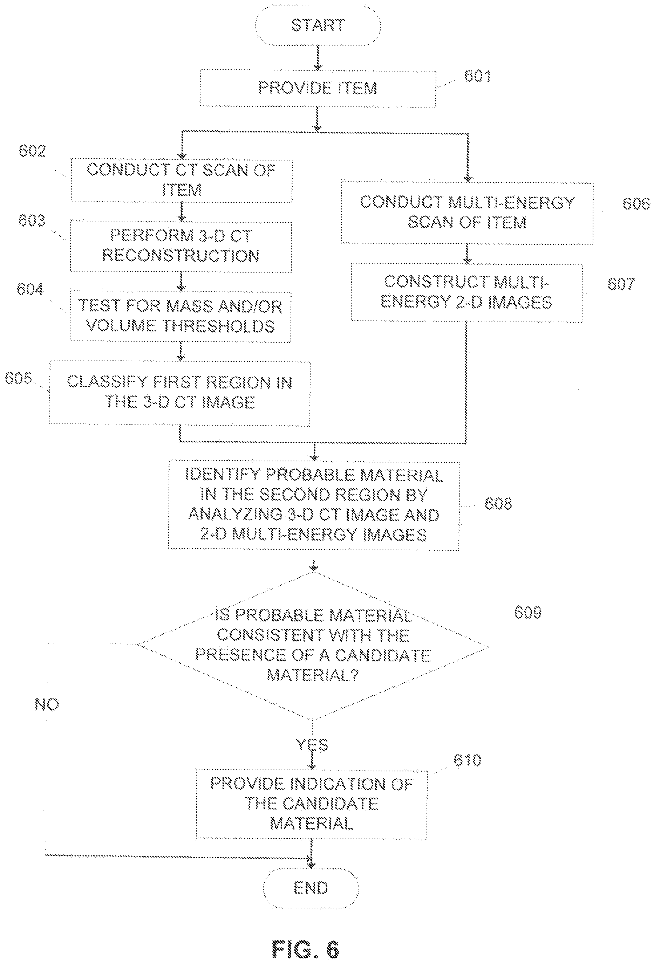

FIG. 6 is a flow chart of a first exemplary process of analyzing a target item utilizing multiple scanners, consistent with the disclosed embodiment shown in FIG. 1. An item, such as exemplary item 330, is provided (Step 601). For example, exemplary item can be provided to the scanners by conveyor 110. A three-dimensional CT scan can be conducted on exemplary item 330 by CT scanner 120 (Step 602). During the CT scan, sets of two-dimensional projection data can be acquired at multiple projection angles, and the projection data can be transferred to data processing system 140. The projection data can be reconstructed into three-dimensional CT image 410 by a transform calculator implemented by data processing system 140 (Step 603). Three-dimensional CT image 410 represents an absorption coefficients map of exemplary item 330. In one embodiment, the transform calculator can further compare the mass and/or volume of the identified candidate region with a candidate region threshold (Step 604). For example, if the volume of an identified region is smaller than a volume threshold, the identified region can be discarded. In any event, based on three-dimensional CT image 410, one or more first regions such as regions 411 and 412 can be classified by the region data classifier implemented by data processing system 140 (Step 605).

Conveyor 110 can provide exemplary item 330 to scanner 130, where a multi-energy line scan can be conducted (Step 606). During the scan, multiple sets of two-dimensional projection data can be acquired by line x-ray detector 132 - for example a set of data at a higher energy value and a lower energy value. Each set of two-dimensional projection data - or the combined set of two-dimensional projection data at both energies - can form a two-dimensional projection image 520 of exemplary item 330 (Step 607).

Probable material in each first region 411 and 412 can be identified by analyzing three-dimensional CT image 410 and two-dimensional projection image 520 obtained in step 605 and step 607 (Step 608). Step 608 can be carried out by a candidate material calculator implemented together with a region data classifier by data processing system 140. Consistent with one embodiment, for example, region data classifier can be configured to utilize at least a portion of the first set of transform data to identify subsets of the second set of scan data associated with second regions, such that first regions 411 and 412 and the identified second regions are approximately commensurate. Further, and consistent with one embodiment, step 608 can include generating the effective atomic number for each of the identified second regions. Additionally or alternatively, step 608 can also include calculating the electron density for each of the identified second regions.

The electron density can be calculated using the following formula:

$$\rho_e(\mathbf{r}) = ( Z_1/A_1 \times \delta_1(r) + Z_2/A_2 \times \delta_2(r) ) \times Na$$

where Na is Avogadro's number ($6.0225 \times 10^{23}$), the variables $Z_{1,2}$ correspond to the atomic numbers of base materials 1 and 2, the variable $A_{1,2}$ corresponds to the atomic weight of materials 1 and 2 and variable $\delta_{1,2}$ correspond to the thicknesses of the materials 1 and 2 along the absorption path. Likewise, the effective atomic number can be calculated using the following formula:

$$Z_{\text{eff}} = \{ [ Z_1/A_1 \times \delta_1(r) \times Z_1^X + Z_2/A_2 \times \delta_2(r) \times Z_2^X] / [ Z_1/A_1 \times \delta_1(r) + Z_2/A_2 \times \delta_1(r) ] \}^{1/X}$$

Here, the exponent $X$ can have a value between 2.8 and 3.4 depending on the scientific literature reference is cited. Common values are 3.0 and 3.1.

The candidate material calculator can further compare the generated effective atomic number and/or electron density value with those in a lookup table that specifies the effective atomic numbers and/or electron density of various materials, and determine which probable material is likely present in the second region. The lookup table can be stored in memory module 242 or in storage device 244. Table A shows an exemplary table that can be used in step 608.

Table A

| Material | Effective Atomic Number |
|---|---|
| Liquid A | $Z_A$ |
| Liquid A | $Z_B$ |
| *** | |
| Metal C | $Z_C$ |
| Metal D | $Z_D$ |
| *** | |
| Explosive E | $Z_E$ |
| Explosive F | $Z_F$ |
| *** | |

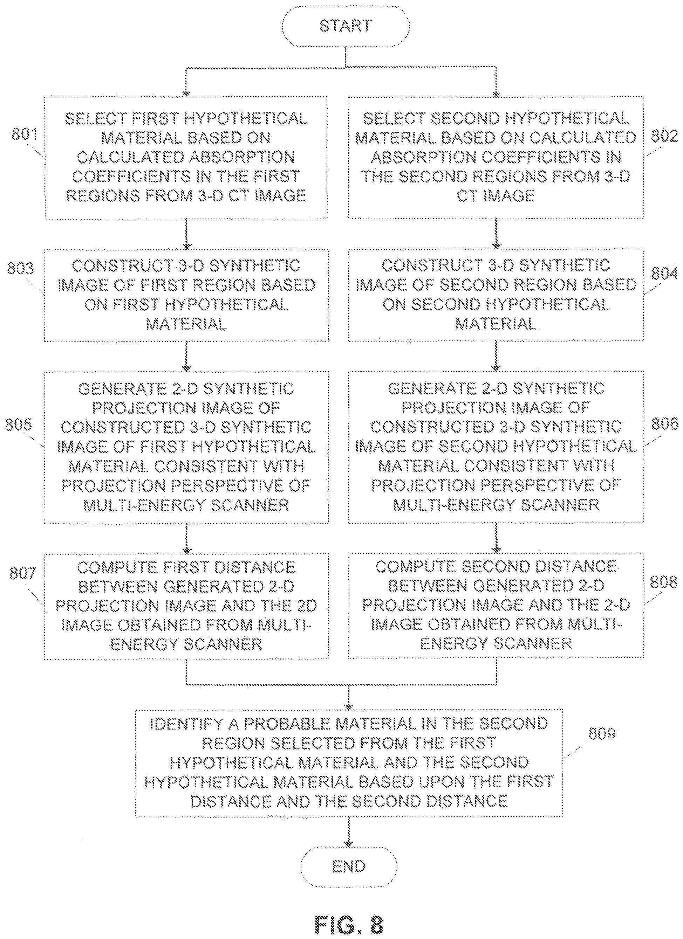

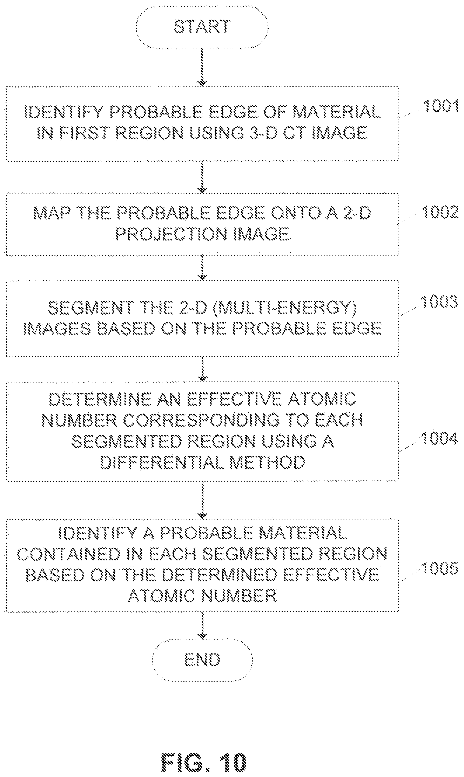

For example, if the generated effective atomic number is consistent with $Z_F$, the candidate material calculator can determine that the probable material in the second region is consistent with the presence of a candidate material (i.e., "Explosive F") in the item being analyzed. The probable material identification process of step 608 will be described in greater detail in FIG. 8 and FIG. 10.

The candidate material calculator further can generate a measure if any of the probable materials determined in step 608 in the second region is consistent with the presence of a candidate material in the item (Step 609). If data associated with one of the regions is consistent with the presence of a candidate material in the item (Step 609: Yes), the candidate material calculator can provide an indication of the candidate material (Step 610). For example, the candidate material calculator can determine that data associated with region 411 is consistent with the presence of an explosive material in the item, and can provide an indication to the user on display device 246 or otherwise provide some notation and/or sign. If none of data associated with the regions is consistent with the presence of a candidate material in the item (Step 609: No), step 610 will be skipped, and the process can conclude.

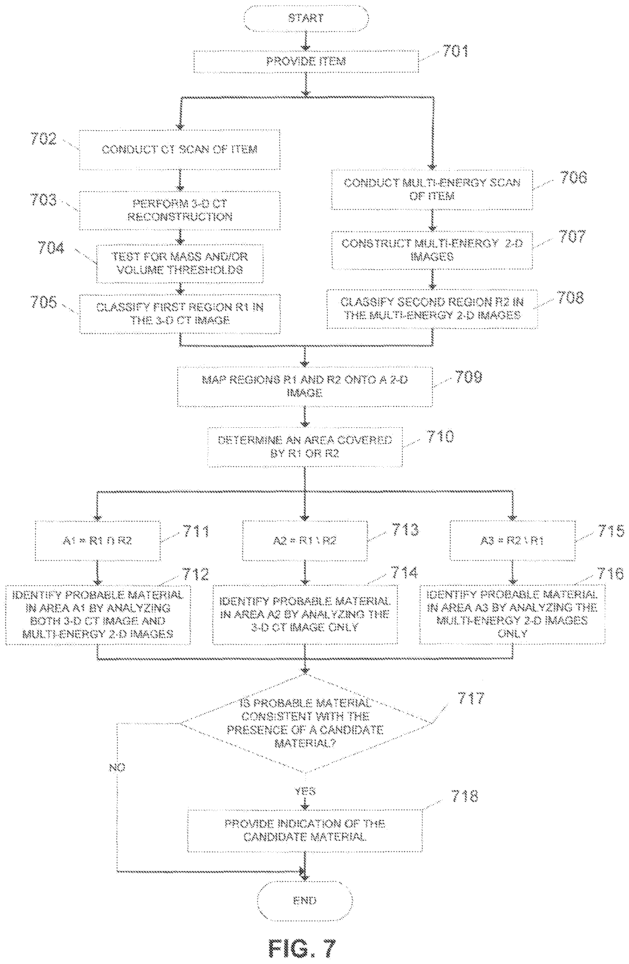

FIG. 7 is a flow chart of a second exemplary process of analyzing a target item utilizing multiple scanners, consistent with the present invention. The process can include steps 701-707 similar to steps 601-607 disclosed in connection with FIG. 6. For purpose of illustration, first regions 411 and 412 classified in step 705 are referred to as R1. Based on two-dimensional projection images 520 obtained in step 707, one or more second regions such as regions 521 and 522 can be classified by the region data classifier implemented either alone or in conjunction with the candidate material calculator by data procession system 140 (Step 708). Again, for purpose of illustration, the identified second regions in step 708 are referred to as R2.

Consistent with one embodiment, step 708 can include calculating an effective atomic number map and/or an electron density map of exemplary item 330, based on two-dimensional projection images 520 corresponding (for example) to a higher energy value and a lower energy value, respectively. A region data classifier, either alone or in conjunction with a candidate material calculator, can then identify each region that has similar effective atomic number values and/or electron density values. Consistent with one embodiment, region data classifier, either alone or in conjunction with a candidate material calculator, can compare the calculated effective atomic numbers and/or electron densities with a set of effective atomic numbers and/or electron densities consistent with the presence of candidate materials in the item being analyzed, and flag only those regions for further analysis that have pixel values consistent with the presence of candidate materials. For example, region 521 corresponding to object 331 can be classified as R2.

Both R1 and R2 can be mapped onto a two-dimensional image (Step 709). The mapping of first regions R1 can be carried out using the same projection perspective of scanner 130 as that used to obtain two-dimensional projection images 520, so that the mapped R1 and R2 can be registered on the same two-dimensional image. For example, forward projection data of R1 can be calculated based on the geometry and projection angle of scanner 130. On the two-dimensional image, one or more areas covered by R1 and/or R2 can be determined (Step 710). Where R1 is determined solely based on the absorption coefficients represented by three-dimensional CT image 410 and R2 is determined solely based on the effective atomic numbers and/or electron density values derived from two-dimensional projection images 520, R1 and R2, when mapped onto the two -dimensional image, may not completely overlap with each other. Consistent with one embodiment, all the areas covered by the mapped R1 or R2 are analyzed to identify the probable materials in those areas, to enhance detection accuracy.

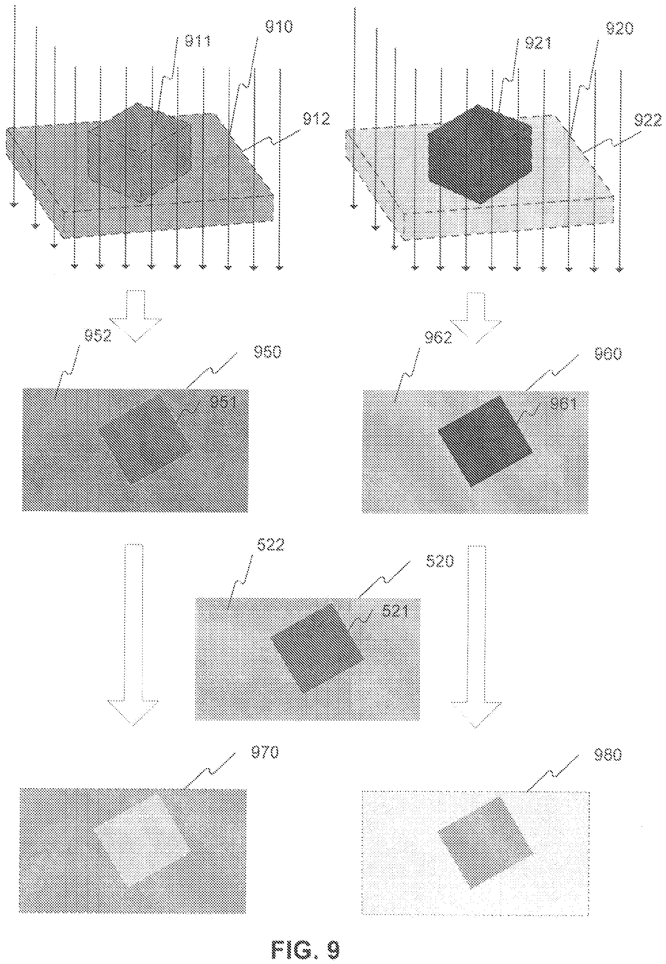

For areas A1 where the mapped R1 overlap with R2 (Step 711), the candidate material calculator can identify probable materials in areas A1 by analyzing both three-dimensional CT image 410 and two-dimensional projection images 520 (Step 712). The probable material identification process of step 712 can be carried out by candidate material calculator, similar to step 608 of FIG. 6, and exemplary algorithms will be described in greater detail in FIG. 8 and FIG. 9. For areas A2 that are within mapped R1 but outside of R2 (Step 713), the candidate material calculator can identify probable materials in areas A2 by analyzing three-dimensional CT image 410 only (Step 714). For example, the candidate material calculator can look up the voxel values of three-dimensional CT image 410 that correspond to areas A2 in a table specifying the absorption coefficients of various materials, and determine which material it contains. Table B shows an exemplary table that can be used in step 714. Similar to Table A, Table B can be stored as a look-up table in memory module 242 or storage device 244.

Table B

| Material | Absorption Coefficient |
|---|---|
| Liquid a | $\mu_a$ |
| Liquid b | $\mu_b$ |
| *** | |
| Metal c | $\mu_c$ |
| Metal d | $\mu_d$ |
| *** | |
| Explosive e | $\mu_e$ |
| Explosive f | $\mu_f$ |
| *** | |

For example, if the generated absorption coefficient in A2 is consistent with $\mu_e$, the candidate material calculator can determine that the probable material in the first region is an explosive material. Consistent with one embodiment, Table A and Table B can be combined into one look-up table with a listing of materials, absorption coefficients, effective atomic numbers, and/or electron density values.

Similarly, for areas A3 that are within R2 but outside of mapped R1 (Step 715), the candidate material calculator can identify probable materials in areas A3 by analyzing two-dimensional projection images 520 only (Step 716). For example, step 716 can include generating the effective atomic numbers for areas A3 based on two-dimensional projection images 520. The candidate material calculator can further compare the effective atomic numbers and/or electron density values with those stored in Table A, and determine a material that is consistent with the data associated with areas A3.

The candidate material calculator can generate a measure if any of the probable materials identified in steps 712, 714, and 716 is consistent with the presence of a candidate material (Step 717). Consistent with one embodiment, the measure can be generated based solely on areas A1. If data consistent with at least one candidate material is detected (Step 717: Yes), the candidate material calculator can provide an indication of the candidate material, for example, via display device 246 (Step 718). If no data consistent with the presence of candidate material is detected (Step 717: No), step 718 will be skipped, and the process can conclude.

FIG. 8 is a flow chart of a first exemplary process of identifying probable material in a region of exemplary item 330, consistent with step 608 shown in FIG. 6. In one embodiment, the exemplary process described in FIG. 8 can also be employed to carry out step 712 shown in FIG. 7. The candidate material calculator can select a first hypothetical material (Step 801) and a second hypothetical material (Step 802) based on the generated absorption coefficient in each first region from three-dimensional CT image 410. In one embodiment, a candidate material calculator can compare the generated absorption coefficients in first region 411 and first region 412 with those stored in Table B. For example, the voxel values in first region 411 can be consistent with $\mu_e$ and the voxel values in first region 412 can be consistent with $\mu_c$. Based on the comparison, the candidate material calculator can determine that data associated with first region 411 is consistent with the presence of an explosive material such as nitroglycerin or trinitrotoluene, and data associated with first region 412 is consistent with the presence of another material (e.g. metal such as iron or copper). As a result, first regions 411 and 412 can comprise a total of four different combinations of materials.

For illustration purposes only, we can assume that the candidate material calculator selects nitroglycerin and iron as the first hypothetical combination of materials for first regions 411 and 412, and trinitrotoluene and copper as the second hypothetical combination of materials for the same regions. As shown in FIG. 9, the candidate material calculator can then construct a three-dimensional synthetic image 910 having first hypothetical combination of materials 911 and 912 in first regions 411 and 412, respectively (Step 803) and construct another three-dimensional synthetic image 920 having second hypothetical combination of materials 921 and 922 in the same regions (Step 804).

The candidate material calculator can generate two-dimensional synthetic projection images 950 and 960 of the constructed three-dimensional synthetic images 910 and 920 (Step 803 and Step 804). Two-dimensional synthetic projection images 950 and 960 can be computed consistent with the projection perspective of scanner 130 that is used to obtain two-dimensional projection images 520, so that the mapped image can be registered with two-dimensional projection images 520. Accordingly, each of the sets of synthetic projection data associated with each of the respective hypothetical combinations can correspond to the hypothetical presence of each of the materials in second region 520. Consistent with one embodiment, two-dimensional synthetic projection images 950 and 960 can be calculated at either of the two energy levels used by scanner 130, and/or can be calculated to be consistent with combined set of two-dimensional projection data at multiple energies.

The candidate material calculator can further compute a distance between each generated two-dimensional synthetic projection image 950 or 960 and two-dimensional projection image 520 obtained from scanner 130 (Step 807 and Step 808). Consistent with one embodiment, the distance between two images can be computed as a LI norm or a L2 norm of the difference image between the two images. As shown in FIG. 9, difference image 970 can be computed by subtracting two-dimensional synthetic projection image 950 from two-dimensional projection image 520 obtained from scanner 130. The distance between image 950 and image 520 can then be computed as sum of pixel intensities of difference image 970 or energy of difference image 970. Similarly, difference image 980 can be computed by subtracting two-dimensional synthetic projection image 960 from two-dimensional projection image 520, and the distance between image 960 and image 520 can be computed based on difference image 980. The computed distance can be associated with the corresponding hypothetical combination of materials that are used to construct the three-dimensional synthetic image. It is contemplated that other algorithms can also be used to compute the distance. Consistent with one embodiment, for each hypothetical combination of materials, the candidate material calculator can compute two distances corresponding to the multiple energy levels, respectively, and then compute the sum of the two distances, or can compute a distance consistent with combined set of two-dimensional projection data at multiple energies.

The candidate material calculator can select one of the hypothetical combinations of materials as the probable combination of materials in second regions 521 and 522 based on the computed distances (Step 809). For example, the hypothetical combination of materials 911 and 912 associated with a shorter distance can be selected, because two-dimension synthetic projection image 960 more closely resembles two-dimensional projection image 520 obtained from scanner 130. The process can conclude after step 809.

Although the exemplary process of FIG. 8 is described in connection with two hypothetical combinations of materials, one skilled in the art would understand that the same method can be used for any arbitrary number of hypothetical combinations of materials. For example, if N (N≥2) possible combinations of materials are identified, the candidate material calculator can compute N distances corresponding to these hypothetical combinations, according to disclosed steps 803-808. In step 809, the candidate material calculator can select the hypothetical combination of materials associated with the shortest distance, among the N distances, as the probable combination of materials in candidature regions 411 and 412.

Consistent with the embodiments disclosed herein, at least two independent physical parameters associated with a material being inspected (such as $Z_{eff}$ and the absorption coefficient, or the electron density and the absorption coefficient), can be acquired. Utilizing at least two independent parameters provides additional information about the inspected material, and allows for a system that can exhibit an increased detection capability for some inspected materials. Especially for those materials that either have an absorption coefficient similar to the typical contents of bags or for those materials that cannot be sufficiently resolved by a conventional scanner and would result in the appearance of artifacts when inspected by such a conventional scanner.

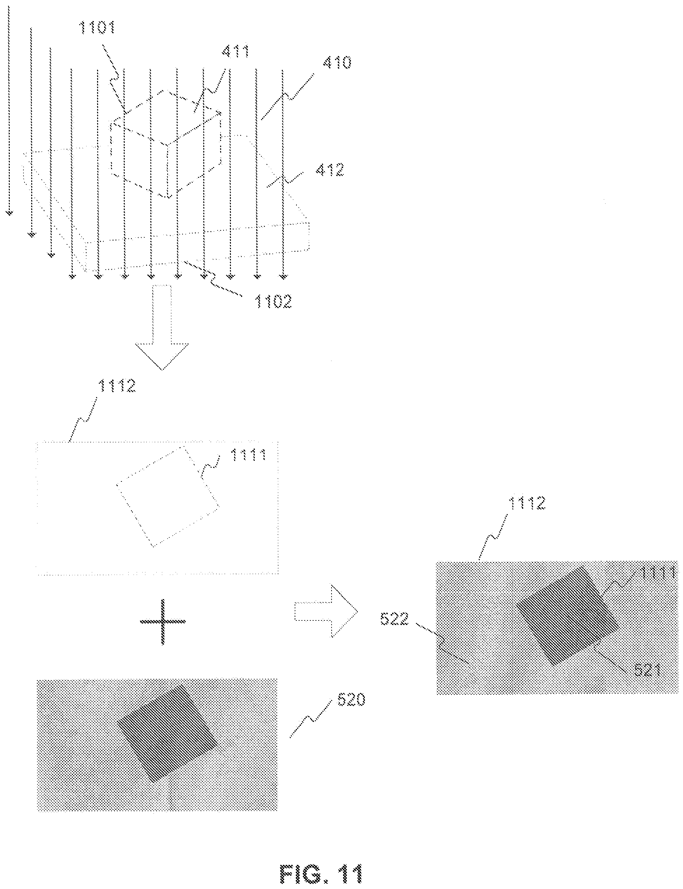

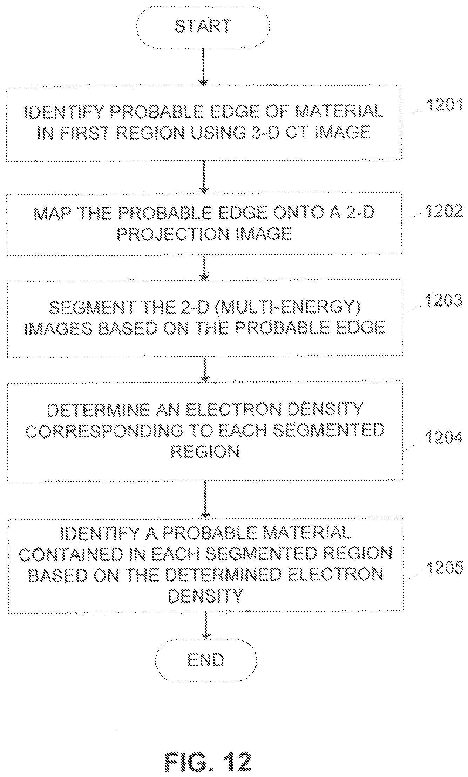

FIGS. 10 and 12 are flow charts consistent with a secondary exemplary process of identifying probable material in a second region of the item, consistent with Step 608 shown in FIG. 6 and Step 712 shown in FIG. 7. The candidate material calculator can identify a probable edge of material in each first region (Step 1001 and Step 1201). As shown in FIG. 11, probable edge 1101 can be identified for first region 411 and probable edge 1102 can be identified for first region 412, based on three-dimensional CT image 410. Consistent with one embodiment, the probable edge can be determined using a differential method, which calculates the difference between every two adjacent voxels and identifies the edge at places where the differences are above a threshold value.

The probable edges 1101 and 1102 can be mapped to two-dimensional projection images of second region 520 obtained from scanner 130 (Step 1002 and Step 1202). As shown in FIG. 11, the mapping can be carried out consistent with projection perspective of scanner 130 that is used to obtain two-dimensional projection images of second region 520, so that mapped edges 1111 and 1112 can be registered with two-dimensional projection images of second region 520. Based on mapped edges 1111 and 1112, two-dimensional projection images of second region 520 can be segmented (Step 1003 and Step 1203). For example, second regions 521 and 522 can be determined in the segmentation step.

For each segmented region, the candidate material calculator can determine an effective atomic number and/or an electron density value corresponding to that region (Step 1004 and Step 1204). Consistent with one embodiment, the effective atomic numbers can be determined using a "jump" method. Referring back to FIG. 3, object 331 superimposes with object 332. Therefore, probable edge 1101 of first region 411 corresponds to the boundary between object 331 and object 332, and probable edge 1102 of first region 412 corresponds to the boundary between object 332 and the bottom surface of exemplary item 330. As explained, two-dimensional projection images of region 520 can be representative of the integral of absorption coefficients of the volumetric segment of exemplary item 330 through which the x-ray beams pass. Accordingly, differential data between two regions separated by mapped edge 1111 of object 331 can be representative of the projection data corresponding solely to object 331. Similarly, differential data between two regions separated by mapped edge 1112 of object 332 can be representative of the projection data corresponding solely to object 332. In step 1004, the candidate material calculator can calculate effective atomic number within segmented regions 521 and 522, based on the corresponding differential data.

The candidate material calculator can further look up the calculated effective atomic number and/or electron density value of each segmented region (such as in Table A for effective atomic number data), and determine the probable material contained in each region (Step 1005 and Step 1205). Process can conclude after steps 1005 and 1205.

It is contemplated that the steps associated with FIGS. 6, 7, 8, 10, and 12 of the present invention can be implemented as a combination of hardware and software or in hardware alone. Furthermore, although certain aspects of the present invention are described as being stored in memory, one skilled in the art will appreciate that these aspects can also be stored on or read from other computer-readable media, such as secondary storage devices, like hard disks, floppy disks, or CD-Rom; or other forms of RAM or ROM. Moreover, although certain aspects of the present invention are described with regard to database instances associated with longterm storage, one skilled in the art will appreciate that the database instances can also be associated with memory records loaded into temporary storage, such as RAM.

Industrial Applicability

The disclosed system and method can be applicable to detection of objects and materials of interest using an automated or semi-automated process. Although disclosed embodiments are described in association with container, crate or baggage inspection such as at an airport, train station, cargo inspection or other port- and border- applications, the disclosed inspection system and inspection method can be used in other applications, such as medical imaging in a hospital or imaging facility, product quality control in a factory, etc.

It will be apparent to those skilled in the art that various modifications and variations can be made in the disclosed system and method without departing from the scope of the disclosure. Additionally, other embodiments of the disclosed system and method will be apparent to those skilled in the art from consideration of the specification. It is intended that the specification and examples be considered as exemplary only, with a true scope of the disclosure being indicated by the following claims.

**Claims**

1. A method of analyzing a target item utilizing multiple scanners, comprising:

    providing an item comprising a material;
    acquiring a first set of scan data associated with said item using a first, three-dimensional computed tomography scanner;
    acquiring a second set of scan data associated with said item using a second, multi-energy line scanner, the second set of scan data comprising a two-dimensional projection image of effective atomic number data, or electron density data;
    generating a first set of transform data from said first set of scan data, the first set of transform data comprising absorption coefficient data;
    analyzing said first set of transform data to identify a subset of said first set of transform data associated with a first region;
    analyzing said second set of scan data to identify a subset of said second set of scan data associated with a second region; and
    generating a measure that at least a portion of scan data is consistent with a presence of a candidate material in said item, where said portion of scan data is selected from at least one of the set consisting of: said subset of said first set of transform data and said subset of said second set of scan data;

    the method further **characterized by**:

    mapping the first and second regions onto a two-dimensional image, determining one or more areas covered by the first and/or second regions on the two-dimensional image, and analyzing the one or more areas to identify the presence of the candidate material;
    wherein:

        for areas where the mapped first region overlaps with the mapped second region, candidate materials are identified by analyzing both the first set of transform data and the second set of scan data;
        for areas that are mapped within the first region but outside the second region, candidate materials are identified by analyzing the first set of transform data only; and
        for areas that are mapped within the second region but outside the first region, candidate materials are identified by analyzing the second set of scan data only.

2. The method of claim 1, where said portion of scan data comprises said subset of said second set of scan data, and wherein said step of analyzing said second set of scan data comprises:

    utilizing at least a portion of said first set of transform data to identify said subset of said second set of scan data associated with a second region, such that said first region and said second region are at least approximately commensurate; and
    wherein said step of generating a measure comprises:

        generating a first set of projection data associated with at least a first hypothetical material in said second region;
        generating a second set of projection data associated with at least a second hypothetical material in said second region;
        calculating a first distance between said subset of second set of scan data associated with the second region and the first set of projection data;
        calculating a second distance between said subset of second set of scan data associated with the second region and the second set of projection data;
        comparing the first distance with the second distance and identifying a probable material in said second region selected from the first hypothetical material and the second hypothetical material; and

generating a measure that said probable material in said second region is consistent with said presence of said candidate material in said item.

3. The method of claim 2, wherein said first set of projection data and said second set of projection data are generated consistent with a projection perspective of the second scanner.

4. The method of claim 2, wherein said step of generating a measure further comprises:
selecting the first hypothetical material and the second hypothetical material based at least in part on the absorption coefficient data associated with said first region.

5. The method of claim 1, where said portion of scan data comprises said subset of said second set of scan data, and wherein said step of analyzing said second set of scan data comprises:

utilizing at least a portion of said first set of transform data to identify said subset of said second set of scan data associated with said second region, such that said first region and said second region are at least approximately commensurate; and
wherein said step of analyzing said first set of transform data further comprises:

analyzing said first set of transform data to identify at least one set of probable edge data associated with said first region; and
generating a set of projection data associated with at least a hypothetical material in said second region, where said hypothetical material is associated with at least one set of hypothetical edge data in said set of projection data, and said set of hypothetical edge data is consistent with said set of probable edge data.

6. The method of claim 5, wherein said step of generating a measure further comprises:
determining a set of effective atomic number data associated with the hypothetical material in said second region based on said set of hypothetical edge data and at least a portion of said second set of scan data associated with said second region.

7. The method of claim 6, wherein said set of projection data is generated consistent with a projection perspective of the second scanner.

8. The method of claim 6, wherein said step of determining a set of effective atomic number data associated with the hypothetical material in said second region further comprises:

generating a set of differential data based on a subset of said second set of scan data associated with a first edge region and a subset of said second set of scan data associated with a second edge region;
where said first edge region and said second edge region are separated by a hypothetical edge region associated with said set of hypothetical edge data; and
determining the set of effective atomic number data associated with the hypothetical material in said second region utilizing said set of differential data.

9. The method of claim 1, where said portion of scan data comprises said subset of said second set of scan data, and wherein said step of analyzing said second set of scan data comprises:

utilizing at least a portion of said first set of transform data to identify said subset of said second set of scan data associated with said second region, such that said first region and said second region are at least approximately commensurate; and
wherein said step of analyzing said first set of transform data further comprises:

analyzing said first set of transform data to identify at least one set of probable edge data associated with said first region; and
generating a set of projection data associated with at least a hypothetical material in said second region, where said hypothetical material is associated with at least one set of hypothetical edge data in said set of projection data, and said set of hypothetical edge data is consistent with said set of probable edge data.

10. The method of claim 9, wherein said step of generating a measure further comprises:
determining a set of electron density data associated with the hypothetical material in said second region based on said set of hypothetical edge data and at least a portion of said second set of scan data associated with said second region.

11. The method of claim 10, wherein said set of projection data is generated consistent with a projection perspective of the second scanner.

12. The method of claim 10, wherein said step of determining a set of electron density data associated with the hypothetical material in said second region further comprises:

generating a set of differential data based on a subset of said second set of scan data associated with a first edge region and a subset of said second set of scan data associated with a second edge region; where said first edge region and said second edge region are separated by a hypothetical edge region associated with said set of hypothetical edge data; and determining the set of electron density data associated with the hypothetical material in said second region utilizing said set of differential data.

13. The method of claim 1, wherein said step of analyzing said first set of transform data further comprises:

analyzing said first set of transform data to generate at least one test value of said first region, where said test value of said first region is selected from the set of: a mass value of said first region, a volume value of said first region; and a mass density value of said first region; and comparing said test value of said first region with a candidate region threshold value.

14. The method of claim 13, where said portion of scan data comprises said subset of said second set of scan data, and wherein said step of analyzing said second set of scan data comprises:

utilizing at least a portion of said first set of transform data to identify said subset of said second set of scan data associated with said second region, such that said first region and said second region are at least approximately commensurate; and wherein said step of analyzing said first set of transform data further comprises: analyzing said first set of transform data to identify at least one set of probable edge data associated with said first region; and generating a set of projection data associated with at least a hypothetical material in said second region, where said hypothetical material is associated with at least one set of hypothetical edge data in said set of projection data, and said set of hypothetical edge data is consistent with said set of probable edge data.

15. The method of claim 14, wherein said step of generating a measure further comprises: determining a set of effective atomic number data associated with the hypothetical material in said second region based on said set of hypothetical edge data and at least a portion of said second set of scan data associated with said second region.

16. The method of claim 15, wherein said set of projection data is generated consistent with a projection perspective of the second scanner.

17. The method of claim 15, wherein said step of determining a set of effective atomic number data associated with the hypothetical material in said second region further comprises:

generating a set of differential data based on a subset of said second set of scan data associated with a first edge region and a subset of said second set of scan data associated with a second edge region; where said first edge region and said second edge region are separated by a hypothetical edge region associated with said set of hypothetical edge data; and determining the set of effective atomic number data associated with the hypothetical material in said second region utilizing said set of differential data.

18. The method of claim 1, where the second set of scan data comprises a first set of projection scan data associated with a first energy and a second set of projection scan data associated with a second energy.

19. The method of claim 1, where said portion of scan data comprises said subset of said second set of scan data, and further comprising:

generating a first measure that said subset of said first set of transform data comprises a subset of data that is consistent with said presence of said candidate material in said item; and comparing said measure and said first measure.

20. The method of claim 19, wherein said step of generating a first measure comprises: comparing the absorption coefficient data associated with said first region with an absorption coefficient consistent with said presence of said candidate material in said item.

21. The method of claim 20, where said step of generating a measure comprises: comparing a set of effective atomic number data associated with said second region with an effective atomic number consistent with the presence of said candidate material in said item.

22. The method of claim 20, where said step of generating a measure comprises: comparing a set of electron density data associated with said second region with an electron density consistent with said presence of said candidate material in said item.

23. A system (100) configured to analyze a target item (10) utilizing multiple scanners, wherein the system comprises at least a first, three-dimensional computed tomography scanner (120) and a second, multi-energy line scanner (130), the system further comprising:

a conveyor (110) configured to provide an item to said first, three-dimensional computed tomography scanner (120) and said second, multi-energy line scanner (130), where the item comprises a material; where the first scanner is configured to acquire a first set of scan data associated with said item; where the second scanner is configured to acquire a second set of scan data associated with said item, the second set of scan data comprising a two-dimensional projection image; a transform calculator configured to generate a first set of transform data from said first set of scan data, the first set of transform data comprising absorption coefficient data; a region data classifier configured to identify a subset of said first set of transform data associated with a first region and to identify a subset of said second set of scan data associated with a second region; and a candidate material calculator configured to generate a measure that at least a portion of scan data is consistent with a presence of a candidate material in said item, where said portion of scan data is selected from at least one of the set consisting of: said subset of said first set of transform data and said subset of said second set of scan data;

the system further **characterized in that**:

the region data classifier and candidate material calculator are configured to map the first and second regions onto a two-dimensional image, determine one or more areas covered by the first and/or second regions on the two-dimensional image, and analyzing the one or more areas to identify the presence of the candidate material; wherein:

for areas where the mapped first region overlaps with the mapped second region, candidate materials are identified by analyzing both the first set of transform data and the second set of scan data; for areas that are mapped within the first region but outside the second region, candidate materials are identified by analyzing the first set of transform data only; and for areas that are mapped within the second region but outside the first region, candidate materials are identified by analyzing the second set of scan data only.

24. The system of claim 23 when configured to perform the method of any of claims 2-22.

25. A computer-readable medium comprising instructions stored thereon, wherein the instructions cause a computer to perform a method of analyzing a target item according to any of claims 1-22.

**Patentansprüche**

1. Verfahren zum Analysieren eines Zielobjekts mithilfe mehrerer Scanner, umfassend:

Bereitstellen eines Objekts, umfassend ein Material;

Erwerben einer ersten Gruppe von Scandaten, die dem Objekt zugeordnet sind, mithilfe eines ersten, dreidimensionalen Computertomographiescanners;

Erwerben einer zweiten Gruppe von Scandaten, die dem Objekt zugeordnet sind, mithilfe eines zweiten Scanners mit mehreren Energieleitungen, wobei die zweite Gruppe von Scandaten ein zweidimensionales Projektionsbild effektiver Atomzahldaten oder von Elektronendichtedaten umfasst;

Generieren einer ersten Gruppe von Transformationsdaten aus der ersten Gruppe von Scandaten, wobei die erste Gruppe von Transformationsdaten Absorptionskoeffizientendaten umfasst;

Analysieren der ersten Gruppe von Transformationsdaten, um eine Untergruppe der ersten Gruppe von Transformationsdaten zu identifizieren, die einer ersten Region zugeordnet sind;

Analysieren der zweiten Gruppe von Scandaten, um eine Untergruppe der zweiten Gruppe von Scandaten zu identifizieren, die einer zweiten Region zugeordnet sind;

und Generieren eines Maßes, dass mindestens ein Teil der Scandaten mit einer Präsenz eines Kandidatenmaterials im Objekt übereinstimmt, wobei der Teil der Scandaten ausgewählt wird aus mindestens einer der Gruppe, bestehend aus: der Untergruppe der ersten Gruppe von Transformationsdaten und der Untergruppe der zweiten Gruppe von Scandaten; wobei das Verfahren ferner **gekennzeichnet ist durch**:

Abbilden der ersten und zweiten Region auf ein zweidimensionales Bild, Bestimmen eines oder mehrerer Bereiche, die von der ersten und/oder zweiten Region auf dem zweidimensionalen Bild abgedeckt sind, und Analysieren des einen oder der mehreren Bereiche, um die Präsenz des Kandidatenmaterials zu identifizieren, wobei:

für Bereiche, in denen sich die abgebildete erste Region mit der abgebildeten zweiten Region überlappt, Kandidatenmaterialien **durch** Analysieren sowohl der ersten Gruppe von Transformationsdaten als auch der zweiten Gruppe von Scandaten identifiziert werden;

für Bereiche, die innerhalb der ersten Region, aber außerhalb der zweiten Region abgebildet werden, Kandidatenmaterialien **durch** Analysieren nur der ersten Gruppe von Transformationsdaten identifiziert werden; und

für Bereiche, die innerhalb der zweiten Region, aber außerhalb der ersten Region abgebildet werden, Kandidatenmaterialien **durch** Analysieren nur der zweiten Gruppe von Scandaten identifiziert werden.

2. Verfahren nach Anspruch 1, wobei der Teil der Scandaten die Untergruppe der zweiten Gruppe von Scandaten umfasst und wobei der Schritt des Analysierens der zweiten Gruppe von Scandaten umfasst:

Verwenden mindestens eines Teils der ersten Gruppe von Transformationsdaten, um die Untergruppe der zweiten Gruppe von Scandaten zu identifizieren, die einer zweiten Region zugeordnet sind, so dass die erste Region und die zweite Region mindestens ungefähr übereinstimmen;

und wobei der Schritt des Generierens eines Maßes umfasst:

Generieren einer ersten Gruppe von Projektionsdaten, die mindestens einem ersten hypothetischen Material in der zweiten Region zugeordnet sind;

Generieren einer zweiten Gruppe von Projektionsdaten, die mindestens einem zweiten hypothetischen Material in der zweiten Region zugeordnet sind;

Berechnen eines ersten Abstands zwischen der Untergruppe der zweiten Gruppe von Scandaten, die der zweiten Region zugeordnet sind, und der ersten Gruppe von Projektionsdaten;

Berechnen eines zweiten Abstands zwischen der Untergruppe der zweiten Gruppe von Scandaten, die der zweiten Region zugeordnet sind, und der zweiten Gruppe von Projektionsdaten;

Vergleichen des ersten Abstands mit dem zweiten Abstand und Identifizieren eines wahrscheinlichen Materials in der zweiten Region, ausgewählt aus dem ersten hypothetischen Material und dem zweiten hypothetischen Material;

und Generieren eines Maßes, dass das wahrscheinliche Material in der zweiten Region mit der Präsenz des Kandidatenmaterials in dem Objekt übereinstimmt.

3. Verfahren nach Anspruch 2, wobei die erste Gruppe von Projektionsdaten und die zweite Gruppe von Projektionsdaten übereinstimmend mit einer Projektionsperspektive des zweiten Scanners generiert werden.

4. Verfahren nach Anspruch 2, wobei der Schritt des Generierens eines Maßes ferner umfasst:
Auswählen des ersten hypothetischen Materials und des zweiten hypothetischen Materials basierend mindestens teilweise auf den Absorptionskoeffizientendaten, die der ersten Region zugeordnet sind.

5. Verfahren nach Anspruch 1, wobei der Teil der Scandaten die Untergruppe der zweiten Gruppe von Scandaten umfasst und wobei der Schritt des Analysierens der zweiten Gruppe von Scandaten umfasst:

Verwenden mindestens eines Teils der ersten Gruppe von Transformationsdaten, um die Untergruppe der zweiten Gruppe von Scandaten zu identifizieren, die der zweiten Region zugeordnet sind, so dass die erste Region und die zweite Region mindestens ungefähr übereinstimmen; und wobei der Schritt des Analysierens der ersten Gruppe von Transformationsdaten ferner umfasst: Analysieren der ersten Gruppe von Transformationsdaten, um mindestens eine Gruppe wahrscheinlicher Randdaten zu identifizieren, die der ersten Region zugeordnet sind;

und Generieren einer Gruppe von Projektionsdaten, die mindestens einem hypothetischem Material in der zweiten Region zugeordnet sind, wobei das hypothetische Material der mindestens einen Gruppe hypothetischer Randdaten in der Gruppe von Projektionsdaten zugeordnet ist, und die Gruppe hypothetischer Randdaten mit der Gruppe wahrscheinlicher Randdaten übereinstimmt.

6. Verfahren nach Anspruch 5, wobei der Schritt des Generierens eines Maßes ferner umfasst:
Bestimmen einer Gruppe effektiver Atomzahldaten, die dem hypothetischen Material in der zweiten Region zugeordnet sind, basierend auf der Gruppe hypothetischer Randdaten und mindestens einem Teil der zweiten Gruppe von Scandaten, die der zweiten Region zugeordnet sind.

7. Verfahren nach Anspruch 6, wobei die Gruppe von Projektionsdaten übereinstimmend mit einer Projektionsperspektive des zweiten Scanners generiert wird.

8. Verfahren nach Anspruch 6, wobei der Schritt des Bestimmens einer Gruppe effektiver Atomzahldaten, die dem hypothetischen Material in der zweiten Region zugeordnet sind, ferner umfasst:

Generieren einer Gruppe von Differentialdaten basierend auf einer Untergruppe der zweiten Gruppe von Scandaten, die einer ersten Randregion zugeordnet sind, und einer Untergruppe der zweiten Gruppe von Scandaten, die einer zweiten Randregion zugeordnet sind;
wobei die erste Randregion und die zweite Randregion durch eine hypothetische Randregion getrennt sind, die der Gruppe hypothetischer Randdaten zugeordnet ist; und Bestimmen der Gruppe effektiver Atomzahldaten, die dem hypothetischen Material in der zweiten Region zugeordnet sind, unter Verwendung der Gruppe von Differentialdaten.

9. Verfahren nach Anspruch 1, wobei der Teil der Scandaten die Untergruppe der zweiten Gruppe von Scandaten umfasst und wobei der Schritt des Analysierens der zweiten Gruppe von Scandaten umfasst:
Verwenden mindestens eines Teils der ersten Gruppe von Transformationsdaten, um die Untergruppe der zweiten Gruppe von Scandaten zu identifizieren, die der zweiten Region zugeordnet sind, so dass die erste Region und die zweite Region mindestens ungefähr übereinstimmen; und wobei der Schritt des Analysierens der ersten Gruppe von Transformationsdaten ferner umfasst:

Analysieren der ersten Gruppe von Transformationsdaten, um mindestens eine Gruppe wahrscheinlicher Randdaten zu identifizieren, die der ersten Region zugeordnet sind;
und Generieren einer Gruppe von Projektionsdaten, die mindestens einem hypothetischem Material in der zweiten Region zugeordnet sind, wobei das hypothetische Material der mindestens einen Gruppe hypothetischer Randdaten in der Gruppe von Projektionsdaten zugeordnet ist, und die Gruppe hypothetischer Randdaten mit der Gruppe wahrscheinlicher Randdaten übereinstimmt.

10. Verfahren nach Anspruch 9, wobei der Schritt des Generierens eines Maßes umfasst:
Bestimmen einer Gruppe von Elektronendichtedaten, die dem hypothetischen Material in der zweiten Region zugeordnet sind, basierend auf der Gruppe hypothetischer Randdaten und mindestens einem Teil der zweiten Gruppe von Scandaten, die der zweiten Region zugeordnet sind.

11. Verfahren nach Anspruch 10, wobei die Gruppe von Projektionsdaten übereinstimmend mit einer Projektionsperspektive des zweiten Scanners generiert wird.

12. Verfahren nach Anspruch 10, wobei der Schritt des Bestimmens einer Gruppe von Elektronendichtedaten, die dem hypothetischen Material in der zweiten Region zugeordnet sind, ferner umfasst:

Generieren einer Gruppe von Differentialdaten basierend auf einer Untergruppe der zweiten Gruppe von Scandaten, die einer ersten Randregion zugeordnet sind, und einer Untergruppe der zweiten Gruppe von Scandaten, die einer zweiten Randregion zugeordnet sind;

wobei die erste Randregion und die zweite Randregion durch eine hypothetische Randregion getrennt sind, die der Gruppe hypothetischer Randdaten zugeordnet ist; und Bestimmen der Gruppe von Elektronendichtedaten, die dem hypothetischen Material in der zweiten Region zugeordnet sind, unter Verwendung der Gruppe von Differentialdaten.

**13.** Verfahren nach Anspruch 1, wobei der Schritt des Analysierens der ersten Gruppe von Transformationsdaten ferner umfasst:

Analysieren der ersten Gruppe von Transformationsdaten, um mindestens einen Testwert der ersten Region zu generieren, wobei der Testwert der ersten Region ausgewählt ist aus der Gruppe:

einem Massenwert der ersten Region, einem Volumenwert der ersten Region; und einem Massedichtewert der ersten Region;
und Vergleichen des Testwerts der ersten Region mit einem Kandidatenregionschwellwert.

**14.** Verfahren nach Anspruch 13, wobei der Teil der Scandaten die Untergruppe der zweiten Gruppe von Scandaten umfasst und wobei der Schritt des Analysierens der zweiten Gruppe von Scandaten umfasst:

Verwenden mindestens eines Teils der ersten Gruppe von Transformationsdaten, um die Untergruppe der zweiten Gruppe von Scandaten zu identifizieren, die der zweiten Region zugeordnet sind, so dass die erste Region und die zweite Region mindestens ungefähr übereinstimmen;
und wobei der Schritt des Analysierens der ersten Gruppe von Transformationsdaten ferner umfasst:

Analysieren der ersten Gruppe von Transformationsdaten, um mindestens eine Gruppe wahrscheinlicher Randdaten zu identifizieren, die der ersten Region zugeordnet sind;
und Generieren einer Gruppe von Projektionsdaten, die mindestens einem hypothetischem Material in der zweiten Region zugeordnet sind, wobei das hypothetische Material der mindestens einen Gruppe hypothetischer Randdaten in der Gruppe von Projektionsdaten zugeordnet ist, und die Gruppe hypothetischer Randdaten mit der Gruppe wahrscheinlicher Randdaten übereinstimmt.

**15.** Verfahren nach Anspruch 14, wobei der Schritt des Generierens eines Maßes umfasst:
Bestimmen einer Gruppe effektiver Atomzahldaten, die dem hypothetischen Material in der zweiten Region zugeordnet sind, basierend auf der Gruppe hypothetischer Randdaten und mindestens einem Teil der zweiten Gruppe von Scandaten, die der zweiten Region zugeordnet sind.

**16.** Verfahren nach Anspruch 15, wobei die Gruppe von Projektionsdaten übereinstimmend mit einer Projektionsperspektive des zweiten Scanners generiert wird.

**17.** Verfahren nach Anspruch 15, wobei der Schritt des Bestimmens einer Gruppe effektiver Atomzahldaten, die dem hypothetischen Material in der zweiten Region zugeordnet sind, ferner umfasst:

Generieren einer Gruppe von Differentialdaten basierend auf einer Untergruppe der zweiten Gruppe von Scandaten, die einer ersten Randregion zugeordnet sind, und einer Untergruppe der zweiten Gruppe von Scandaten, die einer zweiten Randregion zugeordnet sind;
wobei die erste Randregion und die zweite Randregion durch eine hypothetische Randregion getrennt sind, die der Gruppe hypothetischer Randdaten zugeordnet ist; und Bestimmen der Gruppe effektiver Atomzahldaten, die dem hypothetischen Material in der zweiten Region zugeordnet sind, unter Verwendung der Gruppe von Differentialdaten.

**18.** Verfahren nach Anspruch 1, wobei die zweite Gruppe von Scandaten eine erste Gruppe von Projektionsscandaten, die einer ersten Energie zugeordnet sind, und eine zweite Gruppe von Projektionsscandaten, die einer zweiten Energie zugeordnet sind, umfasst.

**19.** Verfahren nach Anspruch 1, wobei der Teil der Scandaten die Untergruppe der zweiten Gruppe von Scandaten umfasst und ferner umfassend:

Generieren eines ersten Maßes, dass die Untergruppe der ersten Gruppe von Transformationsdaten eine Untergruppe von Daten umfasst, die mit der Präsenz des Kandidatenmaterials in dem Objekt übereinstimmt; und Vergleichen des Maßes und des ersten Maßes.

20. Verfahren nach Anspruch 19, wobei der Schritt des Generierens eines ersten Maßes umfasst: Vergleichen der Absorptionskoeffizientendaten, die der ersten Region zugeordnet sind, mit einem Absorptionskoeffizienten, der mit der Präsenz des Kandidatenmaterials in dem Objekt übereinstimmt.

21. Verfahren nach Anspruch 20, wobei der Schritt des Generierens eines Maßes umfasst: Vergleichen einer Gruppe effektiver Atomzahldaten, die der zweiten Region zugeordnet sind, mit einer effektiven Atomzahl, die mit der Präsenz des Kandidatenmaterials in dem Objekt übereinstimmt.

22. Verfahren nach Anspruch 20, wobei der Schritt des Generierens eines Maßes umfasst: Vergleichen einer Gruppe von Elektronendichtedaten, die der zweiten Region zugeordnet sind, mit einer Elektronendichte, die mit der Präsenz des Kandidatenmaterials in dem Objekt übereinstimmt.

23. System (100), das konfiguriert ist, um ein Zielobjekt (10) mithilfe mehrerer Scanner zu analysieren, wobei das System mindestens einen ersten, dreidimensionalen Computertomographiescanner (120) und einen zweiten Scanner mit mehreren Energieleitungen (130) umfasst, wobei das System ferner umfasst:

eine Fördervorrichtung (110), die konfiguriert ist, um dem ersten, dreidimensionalen Computertomographiescanner (120) und dem zweiten Scanner mit mehreren Energieleitungen (130) ein Objekt bereitzustellen, wobei das Objekt ein Material umfasst;
wobei der erste Scanner konfiguriert ist, um eine erste Gruppe von Scandaten zu erwerben, die dem Objekt zugeordnet sind;
wobei der zweite Scanner konfiguriert ist, um eine zweite Gruppe von Scandaten zu erwerben, die dem Objekt zugeordnet sind, wobei die zweite Gruppe von Scandaten ein zweidimensionales Projektionsbild umfassen;
einen Transformationskalkulator, der konfiguriert ist, um eine erste Gruppe von Transformationsdaten aus der ersten Gruppe von Scandaten zu generieren, wobei die erste Gruppe von Transformationsdaten Absorptionskoeffizientendaten umfasst;
einen Regiondatenklassifizierer, der konfiguriert ist, um eine Untergruppe der ersten Gruppe von Transformationsdaten zu identifizieren, die einer ersten Region zugeordnet sind, und eine Untergruppe einer zweiten Gruppe von Scandaten zu identifizieren, die einer zweiten Region zugeordnet sind;
und einen Kandidatenmaterialkalkulator, der konfiguriert ist, um ein Maß zu generieren, dass mindestens ein Teil der Scandaten mit einer Präsenz eines Kandidatenmaterials im Objekt übereinstimmt, wobei der Teil der Scandaten ausgewählt ist aus mindestens einer der Gruppe, bestehend aus: der Untergruppe der ersten Gruppe von Transformationsdaten und der Untergruppe der zweiten Gruppe von Scandaten;
wobei das System ferner **dadurch gekennzeichnet ist, dass**:

der Regiondatenklassifizierer und der Kandidatenmaterialkalkulator konfiguriert sind, um die erste und zweite Region auf ein zweidimensionales Bild abzubilden, einen oder mehrere Bereiche zu bestimmen, die von der ersten und/oder zweiten Region auf dem zweidimensionalen Bild abgedeckt sind, und den einen oder der mehreren Bereiche zu analysieren, um die Präsenz des Kandidatenmaterials zu identifizieren;
wobei:

für Bereiche, in denen sich die abgebildete erste Region mit der abgebildeten zweiten Region überlappt, Kandidatenmaterialien durch Analysieren sowohl der ersten Gruppe von Transformationsdaten als auch der zweiten Gruppe von Scandaten identifiziert werden;
für Bereiche, die innerhalb der ersten Region, aber außerhalb der zweiten Region abgebildet sind, Kandidatenmaterialien durch Analysieren nur der ersten Gruppe von Transformationsdaten identifiziert werden;
und für Bereiche, die innerhalb der zweiten Region, aber außerhalb der ersten Region abgebildet sind, Kandidatenmaterialien durch Analysieren nur der zweiten Gruppe von Scandaten identifiziert werden.

24. System nach Anspruch 23, wenn es konfiguriert ist, um das Verfahren nach einem der Ansprüche 2 bis 22 auszuführen.

**25.** Computerlesbares Medium, umfassend darauf gespeicherte Anweisungen, wobei die Anweisungen einen Computer veranlassen, ein Verfahren zum Analysieren eines Zielobjekts gemäß einem der Ansprüche 1 bis 22 auszuführen.

**Revendications**

**1.** Procédé d'analyse d'un article cible à l'aide de plusieurs scanners, comprenant :

la fourniture d'un article comprenant un matériau ;
l'acquisition d'un premier ensemble de données de balayage associées audit article à l'aide d'un premier tomodensitomètre informatisé tridimensionnel ;
l'acquisition d'un second ensemble de données de balayage associées audit article à l'aide d'un second scanner linéaire multiénergie, le second ensemble de données de balayage comprenant une image de projection bidimensionnelle de données de numéro atomique effectif ou de données de densité électronique ; la génération d'un premier ensemble de données de transformée à partir dudit premier ensemble de données de balayage, le premier ensemble de données de transformée comprenant des données de coefficient d'absorption ; l'analyse dudit premier ensemble de données de transformée pour identifier un sous-ensemble dudit premier ensemble de données de transformée associé à une première zone ;
l'analyse dudit second ensemble de données de balayage pour identifier un sous-ensemble dudit second ensemble de données de balayage associées à une seconde zone ;
et la génération d'une mesure selon laquelle au moins une partie des données de balayage est cohérente avec une présence d'un matériau candidat dans ledit article, ladite partie des données de balayage étant choisie parmi au moins l'un de l'ensemble constitué par : ledit sous-ensemble dudit premier ensemble de données de transformée et ledit sous-ensemble dudit second ensemble de données de balayage ; le procédé étant en outre **caractérisé par** :

la cartographie des première et seconde zones sur une image bidimensionnelle, la détermination d'une ou de plusieurs zones couvertes par les première et/ou seconde zones sur l'image bidimensionnelle, et l'analyse de la ou des zones pour identifier la présence du matériau candidat ;
pour les zones où la première zone cartographiée chevauche la seconde zone cartographiée, lesdits matériaux candidats étant identifiés en analysant le premier ensemble de données de transformée et le second ensemble de données de balayage ;
pour les zones qui sont cartographiées dans la première zone mais qui sont en dehors de la seconde zone, lesdits matériaux candidats étant identifiés en analysant uniquement le premier ensemble de données de transformée ; et pour les zones qui sont cartographiées dans la seconde zone mais qui sont en dehors de la première zone, lesdits matériaux candidats étant identifiés en analysant uniquement le second ensemble de données de balayage.

**2.** Procédé selon la revendication 1, ladite partie de données de balayage comprenant ledit sous-ensemble dudit second ensemble de données de balayage, et ladite étape d'analyse dudit second ensemble de données de balayage comprenant :

l'utilisation d'au moins une partie dudit premier ensemble de données de transformée pour identifier ledit sous-ensemble dudit second ensemble de données de balayage associées à une seconde zone, de sorte que ladite première zone et ladite seconde zone soient au moins approximativement proportionnées ;
et ladite étape de génération d'une mesure comprenant :

la génération d'un premier ensemble de données de projection associées à au moins un premier matériau hypothétique dans ladite seconde zone ;
la génération d'un second ensemble de données de projection associées à au moins un second matériau hypothétique dans ladite seconde zone ;
le calcul d'une première distance entre ledit sous-ensemble du second ensemble de données de balayage associées à la seconde zone et le premier ensemble de données de projection ;
le calcul d'une seconde distance entre ledit sous-ensemble du second ensemble de données de balayage associées à la seconde zone et le second ensemble de données de projection ;
la comparaison de la première distance à la seconde distance et l'identification d'un matériau probable dans ladite seconde zone choisie parmi le premier matériau hypothétique et le second matériau hypothétique ;

et la génération d'une mesure selon laquelle ledit matériau probable dans ladite seconde zone est cohérent avec ladite présence dudit matériau candidat dans ledit article.

3. Procédé selon la revendication 2, ledit premier ensemble de données de projection et ledit second ensemble de données de projection étant générés de manière à être cohérentes avec une perspective de projection du second scanner.

4. Procédé selon la revendication 2, ladite étape de génération d'une mesure comprenant en outre :
le choix du premier matériau hypothétique et du second matériau hypothétique sur la base, au moins en partie, des données de coefficient d'absorption associées à ladite première zone.

5. Procédé selon la revendication 1, ladite partie de données de balayage comprenant ledit sous-ensemble dudit second ensemble de données de balayage, et ladite étape d'analyse dudit second ensemble de données de balayage comprenant :

l'utilisation d'au moins une partie dudit premier ensemble de données de transformée pour identifier ledit sous-ensemble dudit second ensemble de données de balayage associées à ladite seconde zone, de sorte que ladite première zone et ladite seconde zone soient au moins approximativement proportionnées ; et ladite étape d'analyse dudit premier ensemble de données de transformée comprenant en outre : l'analyse dudit premier ensemble de données de transformée pour identifier au moins un ensemble de données de bord probables associées à ladite première zone ;
et la génération d'un ensemble de données de projection associées à au moins un matériau hypothétique dans ladite seconde zone, ledit matériau hypothétique étant associé à au moins un ensemble de données de bord hypothétiques dans ledit ensemble de données de projection, et ledit ensemble de données de bord hypothétiques étant cohérentes avec ledit ensemble de données de bord probables.

6. Procédé selon la revendication 5, ladite étape de génération d'une mesure comprenant en outre :
la détermination d'un ensemble de données de numéro atomique effectif associées au matériau hypothétique dans ladite seconde zone sur la base dudit ensemble de données de bord hypothétiques et d'au moins une partie dudit second ensemble de données de balayage associées à ladite seconde zone.

7. Procédé selon la revendication 6, ledit ensemble de données de projection étant générées de manière à être cohérentes avec une perspective de projection du second scanner.

8. Procédé selon la revendication 6, ladite étape de détermination d'un ensemble de données de numéro atomique effectif associées au matériau hypothétique dans ladite seconde zone comprenant en outre :

la génération d'un ensemble de données différentielles sur la base d'un sous-ensemble dudit second ensemble de données de balayage associées à une première zone de bord et d'un sous-ensemble dudit second ensemble de données de balayage associées à une seconde zone de bord ;
ladite première zone de bord et ladite seconde zone de bord étant séparées par une zone de bord hypothétique associée audit ensemble de données de bord hypothétiques ; et la détermination de l'ensemble de données de numéro atomique effectif associées au matériau hypothétique dans ladite seconde zone à l'aide dudit ensemble de données différentielles.

9. Procédé selon la revendication 1, ladite partie de données de balayage comprenant ledit sous-ensemble dudit second ensemble de données de balayage, et ladite étape d'analyse dudit second ensemble de données de balayage comprenant :

l'utilisation d'au moins une partie dudit premier ensemble de données de transformée pour identifier ledit sous-ensemble dudit second ensemble de données de balayage associées à ladite seconde zone, de sorte que ladite première zone et ladite seconde zone soient au moins approximativement proportionnées ; et ladite étape d'analyse dudit premier ensemble de données de transformée comprenant en outre : l'analyse dudit premier ensemble de données de transformée pour identifier au moins un ensemble de données de bord probables associées à ladite première zone ;
et la génération d'un ensemble de données de projection associées à au moins un matériau hypothétique dans ladite seconde zone, ledit matériau hypothétique étant associé à au moins un ensemble de données de bord hypothétiques dans ledit ensemble de données de projection, et ledit ensemble de données de bord hypothétiques étant cohérentes avec ledit ensemble de données de bord probables.

10. Procédé selon la revendication 9, ladite étape de génération d'une mesure comprenant en outre :
la détermination d'un ensemble de données de densité électronique associées au matériau hypothétique dans ladite seconde zone sur la base dudit ensemble de données de bord hypothétiques et d'au moins une partie dudit second ensemble de données de balayage associées à ladite seconde zone.

11. Procédé selon la revendication 10, ledit ensemble de données de projection étant générées de manière à être cohérentes avec une perspective de projection du second scanner.

12. Procédé selon la revendication 10, ladite étape de détermination d'un ensemble de données de densité électronique associées au matériau hypothétique dans ladite seconde zone comprenant en outre :

la génération d'un ensemble de données différentielles sur la base d'un sous-ensemble dudit second ensemble de données de balayage associées à une première zone de bord et d'un sous-ensemble dudit second ensemble de données de balayage associées à une seconde zone de bord ;
ladite première zone de bord et ladite seconde zone de bord étant séparées par une zone de bord hypothétique associée audit ensemble de données de bord hypothétiques ; et la détermination de l'ensemble de données de densité électronique associées au matériau hypothétique dans ladite seconde zone à l'aide dudit ensemble de données différentielles.

13. Procédé selon la revendication 1, ladite étape d'analyse dudit premier ensemble de données de transformée comprenant en outre :
l'analyse dudit premier ensemble de données de transformée pour générer au moins une valeur d'essai de ladite première zone, ladite valeur d'essai de ladite première zone étant choisie parmi l'ensemble de :

une valeur massique de ladite première zone, une valeur volumique de ladite première zone ; et une valeur de masse volumique de ladite première zone ;
et la comparaison de ladite valeur d'essai de ladite première zone à une valeur seuil de zone candidate.

14. Procédé selon la revendication 13, ladite partie de données de balayage comprenant ledit sous-ensemble dudit second ensemble de données de balayage, et ladite étape d'analyse dudit second ensemble de données de balayage comprenant :

l'utilisation d'au moins une partie dudit premier ensemble de données de transformée pour identifier ledit sous-ensemble dudit second ensemble de données de balayage associées à ladite seconde zone, de sorte que ladite première zone et ladite seconde zone soient au moins approximativement proportionnées ;
et ladite étape d'analyse dudit premier ensemble de données de transformée comprenant en outre :

l'analyse dudit premier ensemble de données de transformée pour identifier au moins un ensemble de données de bord probables associées à ladite première zone ;
et la génération d'un ensemble de données de projection associées à au moins un matériau hypothétique dans ladite seconde zone, ledit matériau hypothétique étant associé à au moins un ensemble de données de bord hypothétiques dans ledit ensemble de données de projection, et ledit ensemble de données de bord hypothétiques étant cohérentes avec ledit ensemble de données de bord probables.

15. Procédé selon la revendication 14, ladite étape de génération d'une mesure comprenant en outre :
la détermination d'un ensemble de données de numéro atomique effectif associées au matériau hypothétique dans ladite seconde zone sur la base dudit ensemble de données de bord hypothétiques et d'au moins une partie dudit second ensemble de données de balayage associées à ladite seconde zone.

16. Procédé selon la revendication 15, ledit ensemble de données de projection étant générées de manière à être cohérentes avec une perspective de projection du second scanner.

17. Procédé selon la revendication 15, ladite étape de détermination d'un ensemble de données de numéro atomique effectif associées au matériau hypothétique dans ladite seconde zone comprenant en outre :

la génération d'un ensemble de données différentielles sur la base d'un sous-ensemble dudit second ensemble de données de balayage associées à une première zone de bord et d'un sous-ensemble dudit second ensemble de données de balayage associées à une seconde zone de bord ;

ladite première zone de bord et ladite seconde zone de bord étant séparées par une zone de bord hypothétique associée audit ensemble de données de bord hypothétiques ; et la détermination de l'ensemble de données de numéro atomique effectif associées au matériau hypothétique dans ladite seconde zone à l'aide dudit ensemble de données différentielles.

18. Procédé selon la revendication 1, ledit second ensemble de données de balayage comprenant un premier ensemble de données de balayage de projection associées à une première énergie et un second ensemble de données de balayage de projection associées à une seconde énergie.

19. Procédé selon la revendication 1, ladite partie de données de balayage comprenant ledit sous-ensemble dudit second ensemble de données de balayage, et comprenant en outre :

la génération d'une première mesure de manière que ledit sous-ensemble dudit premier ensemble de données de transformée comprend un sous-ensemble de données qui est cohérent avec ladite présence dudit matériau candidat dans ledit article ;
et la comparaison de ladite mesure et de ladite première mesure.

20. Procédé selon la revendication 19, ladite étape de génération d'une première mesure comprenant :
la comparaison des données de coefficient d'absorption associées à ladite première zone avec un coefficient d'absorption cohérent avec ladite présence dudit matériau candidat dans ledit article.

21. Procédé selon la revendication 20, ladite étape de génération d'une mesure comprenant : la comparaison d'un ensemble de données de numéro atomique effectif associées à ladite seconde zone avec un numéro atomique effectif cohérent avec la présence dudit matériau candidat dans ledit article.

22. Procédé selon la revendication 20, ladite étape de génération d'une mesure comprenant : la comparaison d'un ensemble de données de densité électronique associées à ladite seconde zone avec une densité électronique cohérente avec ladite présence dudit matériau candidat dans ledit article.

23. Système (100) conçu pour analyser un article cible (10) à l'aide de plusieurs scanners, ledit système comprenant au moins un premier tomodensitomètre informatisé tridimensionnel (120) et un second scanner linéaire multiénergie (130), le système comprenant en outre :

un transporteur (110) conçu pour fournir un article audit premier tomodensitomètre informatisé tridimensionnel (120) et audit second scanner linéaire multiénergie (130), ledit article comprenant un matériau ;
ledit premier scanner étant conçu pour acquérir un premier ensemble de données de balayage associées audit article ;
ledit second scanner étant conçu pour acquérir un second ensemble de données de balayage associées audit article, ledit second ensemble de données de balayage comprenant une image de projection bidimensionnelle ;
un calculateur de transformée conçu pour générer un premier ensemble de données de transformée à partir dudit premier ensemble de données de balayage, le premier ensemble de données de transformée comprenant des données de coefficient d'absorption ;
un classificateur de données de zone conçu pour identifier un sous-ensemble dudit premier ensemble de données de transformée associées à une première zone et pour identifier un sous-ensemble dudit second ensemble de données de balayage associées à une second zone ;
et un calculateur de matériau candidat conçu pour générer une mesure selon laquelle au moins une partie des données de balayage est cohérente avec la présence d'un matériau candidat dans ledit article, ladite partie des données de balayage étant choisie parmi au moins l'un de l'ensemble constitué par : ledit sous-ensemble dudit premier ensemble de données de transformée et dudit sous-ensemble dudit second ensemble de données de balayage ;
le système étant **caractérisé en outre en ce que** :

le classificateur de données de zone et le calculateur de matériau candidat étant conçus pour cartographier les première et seconde zones sur une image bidimensionnelle, déterminer une ou plusieurs zones couvertes par les première et/ou seconde zones sur l'image bidimensionnelle, et analyser la ou les zones pour identifier la présence du matériau candidat ;

pour les zones où la première zone cartographiée chevauche la seconde zone cartographiée, lesdits matériaux candidats étant identifiés en analysant le premier ensemble de données de transformée et le second ensemble de données de balayage ;

pour les zones qui sont cartographiées dans la première zone mais en dehors de la second zone, lesdits matériaux candidats étant identifiés en analysant uniquement le premier ensemble de données de transformée ;

et pour les zones qui sont cartographiées dans la seconde zone mais en dehors de la première zone, lesdits matériaux candidats étants identifiés en analysant uniquement le second ensemble de données de balayage.

24. Système selon la revendication 23, lorsqu'il est configuré pour exécuter le procédé selon l'une quelconque des revendications 2 à 22.

25. Support lisible par ordinateur comprenant des instructions stockées sur celui-ci, lesdites instructions amenant un ordinateur à exécuter un procédé d'analyse d'un article cible selon l'une quelconque des revendications 1 à 22.

FIG. 1

140

241

STORAGE
DEVICE

244

PROCESSOR

SCANNER
CONTROL
INTERFACE

243

USER INPUT
INTERFACE

245

MEMORY
MODULE

242

DISPLAY

~246

FIG. 2

FIG. 3

FIG. 4

FIG. 5

FIG. 6

FIG. 7

EP 2 676 128 B1

START

| 801 | SELECT FIRST HYPOTHETICAL MATERIAL BASED ON CALCULATED ABSORPTION COEFFICIENTS IN THE FIRST REGIONS FROM 3-D CT IMAGE |
| 802 | SELECT SECOND HYPOTHETICAL MATERIAL BASED ON CALCULATED ABSORPTION COEFFICIENTS IN THE SECOND REGIONS FROM 3-D CT IMAGE |

801 — SELECT FIRST HYPOTHETICAL MATERIAL BASED ON CALCULATED ABSORPTION COEFFICIENTS IN THE FIRST REGIONS FROM 3-D CT IMAGE

802 — SELECT SECOND HYPOTHETICAL MATERIAL BASED ON CALCULATED ABSORPTION COEFFICIENTS IN THE SECOND REGIONS FROM 3-D CT IMAGE

803 — CONSTRUCT 3-D SYNTHETIC IMAGE OF FIRST REGION BASED ON FIRST HYPOTHETICAL MATERIAL

804 — CONSTRUCT 3-D SYNTHETIC IMAGE OF SECOND REGION BASED ON SECOND HYPOTHETICAL MATERIAL

805 — GENERATE 2-D SYNTHETIC PROJECTION IMAGE OF CONSTRUCTED 3-D SYNTHETIC IMAGE OF FIRST HYPOTHETICAL MATERIAL CONSISTENT WITH PROJECTION PERSPECTIVE OF MULTI-ENERGY SCANNER

806 — GENERATE 2-D SYNTHETIC PROJECTION IMAGE OF CONSTRUCTED 3-D SYNTHETIC IMAGE OF SECOND HYPOTHETICAL MATERIAL CONSISTENT WITH PROJECTION PERSPECTIVE OF MULTI-ENERGY SCANNER

807 — COMPUTE FIRST DISTANCE BETWEEN GENERATED 2-D PROJECTION IMAGE AND THE 2D IMAGE OBTAINED FROM MULTI-ENERGY SCANNER

808 — COMPUTE SECOND DISTANCE BETWEEN GENERATED 2-D PROJECTION IMAGE AND THE 2-D IMAGE OBTAINED FROM MULTI-ENERGY SCANNER

809 — IDENTIFY A PROBABLE MATERIAL IN THE SECOND REGION SELECTED FROM THE FIRST HYPOTHETICAL MATERIAL AND THE SECOND HYPOTHETICAL MATERIAL BASED UPON THE FIRST DISTANCE AND THE SECOND DISTANCE

END

FIG. 8

29

FIG. 9

START

IDENTIFY PROBABLE EDGE OF MATERIAL IN FIRST REGION USING 3-D CT IMAGE — 1001

MAP THE PROBABLE EDGE ONTO A 2-D PROJECTION IMAGE — 1002

SEGMENT THE 2-D (MULTI-ENERGY) IMAGES BASED ON THE PROBABLE EDGE — 1003

DETERMINE AN EFFECTIVE ATOMIC NUMBER CORRESPONDING TO EACH SEGMENTED REGION USING A DIFFERENTIAL METHOD — 1004

IDENTIFY A PROBABLE MATERIAL CONTAINED IN EACH SEGMENTED REGION BASED ON THE DETERMINED EFFECTIVE ATOMIC NUMBER — 1005

END

**FIG. 10**

FIG. 11

START

IDENTIFY PROBABLE EDGE OF MATERIAL IN FIRST REGION USING 3-D CT IMAGE — 1201

MAP THE PROBABLE EDGE ONTO A 2-D PROJECTION IMAGE — 1202

SEGMENT THE 2-D (MULTI-ENERGY) IMAGES BASED ON THE PROBABLE EDGE — 1203

DETERMINE AN ELECTRON DENSITY CORRESPONDING TO EACH SEGMENTED REGION — 1204

IDENTIFY A PROBABLE MATERIAL CONTAINED IN EACH SEGMENTED REGION BASED ON THE DETERMINED ELECTRON DENSITY — 1205

END

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003147489 A
- US 2006104414 A
- US 6453003 B